(19)

**Europäisches Patentamt**

**European Patent Office**

**Office européen des brevets**

(11) **EP 4 386 030 A1**

(12) **EUROPEAN PATENT APPLICATION**

(43) Date of publication:
**19.06.2024 Bulletin 2024/25**

(21) Application number: **23215861.8**

(22) Date of filing: **12.12.2023**

(51) International Patent Classification (IPC):
*C08G 18/36* (2006.01)    *C09D 7/65* (2018.01)
*C09D 175/04* (2006.01)    *C08G 18/02* (2006.01)
*C09D 5/00* (2006.01)

(52) Cooperative Patent Classification (CPC):
**C09D 175/04; C08G 18/025; C08G 18/36;
C09D 5/00; C09D 7/65**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.12.2022 EP 22213143**

(71) Applicant: **Jotun A/S
3202 Sandefjord (NO)**

(72) Inventors:
• **BERGE, Christian
3209 Sandefjord (NO)**
• **JENSEN, Marianne Slang
3209 Sandefjord (NO)**

(74) Representative: **Marks & Clerk LLP
15 Fetter Lane
London EC4A 1BW (GB)**

(54) **FLOOR COATING**

(57)    A coating composition, preferably a one-component coating composition, comprising:
(i) a polyurethane;
(ii) an alkyd;
(iii) at least 0.2 wt% composite wax, based on the total weight of the composition;
(iv) a polycarbodiimide;
(v) a drier; and
(vi) water;
wherein the weight ratio of said polyurethane to said alkyd is 85:15 to 30:70, and said composition has a pH of ≥ 8.0, preferably 8.0-12.0, more preferably 8.0-11.0, and still more preferably 8.5-10.0.

EP 4 386 030 A1

**Description**

INTRODUCTION

The present invention relates to a floor coating composition, preferably a one-component, floor coating composition, comprising: (i) a polyurethane; (ii) an alkyd; (iii) at least 0.2 wt% composite wax, based on the total weight of the composition; (iv) a polycarbodiimide; (v) a drier; and (vi) water, wherein the weight ratio of said polyurethane to said alkyd is 85:15 to 30:70, and said composition has a pH of greater than or equal to 8.0. The invention also relates to a method for preparing the coating composition, a container containing the coating composition and the use of the composition to form a coating on at least one surface of an article, preferably a floor. Additionally, the invention relates to a method of coating a surface (e.g. a floor), comprising applying the composition and to coatings on a surface (e.g. a floor), wherein the coating is formed from the composition.

BACKGROUND

Floor coatings are required to have many different properties. A floor coating must have good scratch and abrasion resistance because the coating will be exposed to high mechanical impact. A floor coating must also be flexible to avoid a build-up of dimensional stress that could result in panel fracture or panel section gaps. This need arises because common floor coating substrates, such as wood, e.g. solid wood panels, are often subjected to dimensional changes due to, e.g. changes in temperature and/or humidity. Strength and flexibility of the floor coating therefore need to be balanced. Good adhesion to the substrate e.g. wood, UV lacquered surface, and laminate is obviously critical. It is also important that the coating is not damaged (e.g. through loss of adhesion) if the coating is exposed to water, such as water spills over a prolonged period of time. Additionally, it is critical that the coating is easy to clean (i.e., low surface friction), yet not too slippery. Fast drying properties are advantageous as it is beneficial to have the coated floor ready for use a short time after application but too fast drying may be a disadvantage as this may give brush or roller marks. Good application properties are also needed in order for the coating composition to be easily applied (e.g. with roller or brush) and with a smooth finish (good levelling).

Floor coating compositions have been based on a broad range of binder chemistries and corresponding curing and crosslinking technologies. Floor coatings can be applied industrially, on-site by professionals/craftsmen or on-site by ordinary consumers (do-it-yourself/DIY). Performance requirements for floor coatings intended for industrial application will normally be different from a DIY floor coating. Industrial application in factories often require the floor coating to be suitable for a high throughput process, that may include high-speed application and drying at elevated temperatures for accelerated curing. Curing often takes place within minutes to make the panels stackable. Such coatings are typically 2-component or UV-curing systems. Due to the carefully controlled application settings the final appearance is even and homogeneous with no or little imperfections.

Floor coatings for DIY application, in e.g. residential homes, need longer open time to allow for adjustments during application, as well as good flow and levelling in order to leave a pleasing appearance of the surface. DIY coatings are typically applied at ambient temperatures by use of brush and/or short haired roller. Drying normally takes place within hours and the curing time often extends for weeks before the coating is fully cured. Such coatings are typically 1-component or, in some cases, 2-component systems. External crosslinking by a second component offers increased mechanical and chemical strength to the coating. However, 2-component systems (e.g. involving isocyanate or aziridine chemistry) are often associated with poor toxicological health- and safety profiles and are often restricted or not allowed for DIY use.

Ideally DIY floor coatings are prepared using 1-component compositions that are provided in ready to use form. This means that the risk of non-professionals mixing components in the wrong ratio, leading to coating failure, is avoided and the composition can be easily stored in between applications. In particular, 1-component waterborne floor coating compositions are desired, because these avoid exposure of non-professionals to hazardous volatile chemicals. Unfortunately, the majority of 1-component compositions currently available produce coatings with insufficient scratch resistance, water resistance, and/or wet adhesion, especially when exposed to high wear and humid areas (e.g. in entrances and hallways, kitchen areas, bathrooms, and laundry rooms).

SUMMARY OF THE INVENTION

Viewed from a first aspect, the present invention provides a coating composition, preferably a one-component coating composition, comprising:

(i) a polyurethane;
(ii) an alkyd;

(iii) at least 0.2 wt% composite wax, based on the total weight of the composition;
(iv) a polycarbodiimide;
(v) a drier; and
(vi) water;

wherein the weight ratio of said polyurethane to said alkyd is 85:15 to 30:70, and said composition has a pH of ≥ 8.0, preferably 8.0-12.0, more preferably 8.0-11.0, and still more preferably 8.5-10.0.

Viewed from a further aspect, the present invention provides a method for preparing a composition as hereinbefore defined, comprising mixing:

(i) a polyurethane;
(ii) an alkyd;
(iii) at least 0.2 wt% composite wax, based on the total weight of the composition;
(iv) a polycarbodiimide;
(v) a drier; and
(vi) water.

Viewed from a further aspect, the present invention provides a container containing a composition as hereinbefore defined.

Viewed from a further aspect, the present invention provides a method of coating a surface, wherein said method comprises:

(i) applying a composition as hereinbefore defined to said surface; and
(ii) drying and/or curing said composition to form a coating on the surface.

Viewed from a further aspect, the present invention provides a coating on a surface, wherein said coating is formed from a composition as hereinbefore defined.

Viewed from a further aspect, the present invention provides a use of a composition as hereinbefore defined to form a coating on at least one surface of an article.

DEFINITIONS

As used herein the term "coating composition" refers to a composition that, when applied to a surface, forms a film or coating thereon.

As used herein the term "one component coating composition" refers to a coating composition which is in ready to use or apply form. Generally such compositions do not require any additional ingredients to be added, at the point of application. Optionally water and/or solvent may be added prior to application.

As used herein the term "fatty acid modified polyurethane" refers to a polyurethane that has been modified by at least one fatty acid.

As used herein the term "alkyd" refers to an alkyd resin, or mixture of alkyd resins. The term "alkyd" is used interchangeably herein with "alkyd resin". The alkyd is derived from at least a polycarboxylic acid and/or anhydride, a polyol, and an unsaturated fatty acid or oil.

As used herein the term "urethane modified alkyd" refers to an alkyd that has been modified by at least one urethane. This term encompasses polyurethane modified alkyds.

As used herein the term "oil length" is equal to the weight of any fatty acid in the alkyd taken together with the polyol needed to completely esterify the fatty acid, minus the weight of water generated during esterification, expressed as a percentage of the total solids content of the finished alkyd.

As used herein the term "waterborne composition" refers to a dispersion wherein the continuous phase is water. For example, in a waterborne composition comprising alkyd, the alkyd resin is typically dispersed as droplets in a continuous aqueous phase.

As used herein the term "dispersion" refers to a dispersion of particles or droplets dispersed in a continuous liquid phase. Typically, the continuous liquid phase is water. Droplets dispersed in water can be referred to as an emulsion. In the present invention the term "dispersion" refers to both particles and droplets (emulsions) dispersed in water.

As used herein the term "composite wax" refers to a wax comprising at least two immiscible components, i.e. components that will not mix and which remain as separate, distinct phases. Preferably the at least two immiscible components are non-similar chemically and/or physically.

As used herein the term "polycarbodiimide" refers to a compound comprising at least two, and preferably at least three -N=C=N- groups in its structure. These groups may react with carboxylic acid groups (RCOOH) to yield -NH-CO-NH-CO-R groups. Other functional groups may also be formed.

As used herein the term carbodiimide equivalent weight refers to the weight of compound that is required to provide 1 mole of carbodiimide groups.

As used herein the term "drier" refers to a compound that accelerates drying and curing of a coating by catalyzing the reaction between molecular oxygen and double bonds (also called auto oxidation), thereby shortening the total drying and curing time of the film. Driers are sometimes referred to as siccatives.

As used herein the term "primary drier" refers to driers that predominantly function top-down at the surface of the coating, where the oxygen concentration is highest. Typically primary driers are metal based autooxidation catalysts, which decompose hydroperoxide. Primary driers are sometimes referred to as top driers, surface driers, catalytic driers, oxidation driers, or oxidation catalysts.

As used herein the term "secondary drier" refers to driers that are active in the cross-linking steps of drying and curing. For example, these driers may link fatty acid chains via oxygen-metal-oxygen bridges. Secondary driers are sometimes referred to as through driers.

As used herein the term "auxiliary drier" refers to driers that modify the effect of other driers, but do not achieve drying action on their own. Generally, auxiliary driers are added to improve or control the activity of a primary drier.

As used herein the term "acid number" refers to the number of carboxylic acid groups present in a compound. It is expressed as the quantity of base (i.e. KOH), in milligrams, required to neutralise the acid groups present in 1 g of a sample. It is determined according to NS-EN-ISO 2114:2000, Method A as described in the Test Method description.

As used herein the term "molecular weight" refers to weight average molecular weight (Mw), unless otherwise specified. It is determined by Gel Permeation Chromatography.

As used herein the term "Mn" refers to number average molecular weight. It is determined by Gel Permeation Chromatography.

As used herein the term "polydispersity index (PDI)" refers to Mw/Mn.

As used herein the term "$D_{50}$" refers to the size at which 50% of the particles have a diameter smaller than the value recited. It is determined by ISO 13320:2009 using a Malvern Mastersizer 3000 as described in the Test Method description.

As used herein the term "$D_{98}$" refers to the size at which 98% of the particles have a diameter smaller than the value recited. It is determined by ISO 13320:2009 using a Malvern Mastersizer 3000 as described in the Test Method description.

As used herein the term "average diameter" refers to the Z-average diameter as determined by ISO 22412:2017 using a Malvern Zetasizer Nano S instrument.

As used herein "curable at ambient temperature" refers to a coating composition that, following application to a substrate, is capable of curing in the presence of ambient air. Generally the air will have a relative humidity of 10-100 %, e.g. 15 to 78%. Generally the air will have a temperature of 5-50 °C, preferably 5-40 °C, more preferably 10-35 °C, e.g. 15-30 °C.

As used herein the term "cure" refers the process by which crosslinkable components of the composition are at least partially crosslinked, and preferably are crosslinked. One skilled in the art will understand that the presence and degree of cross linking is evidenced by some of the properties of the coating.

As used herein the term "biocide" refers to compounds that act to prevent biological growth, e.g. growth of bacteria, mould and/or algae. Biocides are also referred to as antimicrobial agents, biologically active compounds, (dry) film preservatives, (dry) film biocides, in can preservatives, in can biocides, and toxicants. Biocides can also be named according to the target microorganism e.g. fungicide, mildewicide, algicide, algaecide and bactericide.

As used herein the term "colour pigment" is a pigment that is added to a composition to give colour. Colour pigments include white pigments, such as TiOz.

As used herein the term "tinted" refers to a coating that is coloured by the presence of tinters or colorants.

As used herein the term "tinter" refers to a colorant that is added to a coating composition to provide a desired colour. Typically tinters are added after the general preparation of a coating composition, often referred to as a base composition, which comprises less than 0.5 wt% of colour pigments other than $TiO_2$, to provide a coloured coating composition. Typically tinters comprise colour pigments and optionally other ingredients such as water, solvent and additives.

As used herein the term "multicolour tinting system" refers to a tinting machine comprising a plurality of tinters, and software containing colour formulations. When the multicolour tinting system is activated by a specific colour being chosen, a specific combination and amount of tinters are added to the coating composition by the tinting machine, according to its software. The coating composition is mixed, preferably with a mixing machine, giving a coating composition with homogenous colour.

As used herein the term "coating system" refers to a combination of at least two coating compositions that are intended to be used to form different layers of a multilayered coating.

As used herein the term "weight % (wt%)", when used in relation to individual constituents of the composition, e.g. binder, rheology modifier, biocide, drier etc., refers to the actual weight of constituent, i.e. without volatile components present, unless otherwise specified.

As used herein the term "weight % (wt%)", when used in relation to the coating composition, refers to an ingredient weight (solids) relative to the total weight of the composition, i.e. including non-volatile and volatile components, unless otherwise specified.

As used herein the term "Volatile Organic Compounds" refers to compounds having a boiling point of 250°C at 101.3 kPa. This is the definition given in EU Directive 2004/42/CE.

## DETAILED DESCRIPTION OF THE INVENTION

The present invention relates to a coating composition, preferably a one-component coating composition, comprising: (i) a polyurethane; (ii) an alkyd; (iii) at least 0.2 wt% composite wax, based on the total weight of the composition; (iv) a polycarbodiimide; (v) a drier; and (vi) water; wherein the weight ratio of said polyurethane to said alkyd is 85:15 to 30:70, and the composition has a pH of $\geq 8.0$. Preferably the composition has a pH of $\geq 8.5$, preferably 8.0-12.0, more preferably 8.0-11.0, and still more preferably 8.5-10.0.

Preferably the coating composition further comprises: (vii) matting agent; (viii) rheology modifier; (ix) wetting and/or dispersing agent; (x) foam control agent; (xi) biocide; (xii) pH modifier; (xiii) $TiO_2$ and/or colour pigment; (xiv) inorganic filler; (xv) binders; (xvi) organic solvent and/or (xvii) additives.

Advantageously, the coating composition of the present invention produces coatings with scratch resistance, abrasion resistance, and water resistance as well as strong adhesion. It has also been found that the coating composition of the present invention can be deployed to produce a coating of low gloss at 85° without inclusion of a matting agent. The simplification of a coating in this way is clearly beneficial from both a cost and ease of preparation standpoint.

A further benefit of the coating composition of the present invention is that it has a relatively short drying time (without being so fast as to cause brush or roller marks), even at ambient temperatures, and suitable viscosity for straightforward application by conventional techniques. This combination of properties means that the coating composition of the present invention is ideally suited for the preparation of floor coatings.

The short drying time of the coating composition of the present invention is at least in part due to a dual cure mechanism, based upon two distinct curing mechanisms, namely an oxidative curing/crosslinking of double bonds in the fatty acid groups present in the alkyd of the binder in the presence of atmospheric oxygen catalysed by a drier, and a crosslinking reaction that takes place between polycarbodiimide and carboxylic acid groups in the binder. Advantageously this improves the scratch resistance of the coating compositions.

After curing, the coating obtained has a double crosslinked three-dimensional network of polymer chains. In the compositions of the present invention, which also contain a composite wax, the dual cure surprisingly results in a coating having scratch resistance, abrasion resistance and water resistance/wet adhesion as well as good drying properties and faster curing.

Moreover, the coating composition of the present invention is preferably a one-component coating composition. This is highly advantageous due to its ease of use for non-professionals.

### Binder

The coating composition of the present invention comprises a binder. The binder comprises, e.g. consists of, a polyurethane and an alkyd.

The solids weight ratio of polyurethane and alkyd is 85:15 to 30:70, and preferably 80:20 to 40:60. This weight ratio is necessary to ultimately provide a coating that possess scratch resistance, abrasion resistance, water resistance and adhesion. In other words, the combination of properties needed for a floor coating.

The total amount (solids) of binder in the coating composition is preferably 5-45 wt%, more preferably 5-30 wt%, and still more preferably 8-25 wt% based on the total weight of the composition.

The total amount of binder (solids) in the coating composition is preferably 10-80 wt%, more preferably 15-60 wt%, still more preferably 25-50 wt% based on the solids weight of the composition.

### Polyurethane

The coating composition of the present invention comprises at least one polyurethane.

In the coating composition of the present invention, the polyurethane is preferably in the form of a dispersion. Preferably the polyurethane is dispersed in a continuous water (aqueous) phase or in a continuous water/organic phase. Preferably the polyurethane is dispersed in a continuous aqueous phase, more preferably an aqueous phase comprising at least 95 wt% water and still more preferably an aqueous phase consisting of water.

The average diameter (Z-average diameter) of the polyurethane in the dispersion is preferably 30-400 nm, more preferably 50-250 nm and still more preferably 80-120 nm. Preferably the amount of polyurethane in the dispersion is 20-55 wt%, more preferably 30-45 wt%, based on the total weight of the dispersion. The dispersion may comprise additives, solvents and in-can preservatives. Preferably the amount of additives, solvents and in-can preservatives is low, e.g. 0-5.0 wt%.

Polyurethanes are obtained by the reaction of polyfunctional polyols and polyfunctional isocyanates. The latter are synthesized by oligomerization of monomeric diisocyanates. Commonly used isocyanates include hexamethylene diisocyanate (HDI), isophorone diisocyanate (IPDI), bis-(4-isocyanatcyclohexyl)methane (H12MDI), 2,4- and 2,6-toluene diisocyanate (TDI), diphenylmethane 4,4- and/or 2,4-diisocyanate (MDI). Other examples include xylene diisocyanate (XDI), hydrogenated xylylene diisocyanate (H6XDI), 2,2,4-and 2,4,4-trimethyl-1,6-diisocyanateohexane (TMDI), tetramethylxylene diisocyanate (TMXDI), 1,5-pentamethylene diisocyanate, triphenylmethane-4,4',4"-triisocyanate and tris(p-isocyanatophenyl)thiophosphate.

Commonly used polyols have two or more hydroxyl groups per molecule. Suitable polyols include 1,6-hexane diol, neopentyl glycol, butane diol, ethylene glycol, glycerol, polyacrylate polyols, polyester, polyols, polyether polyols, polycarbonate polyols or polycaprolactone polyols. Polyester polyols are preferably derived by polycondensation of multifunctional carboxylic acids and polyhydroxyl compounds. Amine functional compounds may be used as chain extenders.

Chemical composition and processing of polyurethanes and polyurethane dispersions are described in Polyurethanes. Coatings, Adhesives and Sealants by Meier, Vesthues, Danielmeier, Kruppa and Squiller, 2nd revised edition, Vincentz Network, 2019. The process of making waterborne polyurethane may involve a step of partial or full neutralization of carboxylic groups present with amines (e.g. diethanolamine, aminomethylpropanol, dimethylethanolamine, triethylamine, morpholine). Surfactants may also be used.

Preferably the polyurethane present in the coating composition of the present invention has a Mw of 1000 to 3000000, more preferably 1500 to 200000 and still more preferably 2000 to 100000.

A preferred polyurethane dispersion present in the coating compositions of the present invention comprises a polymer having a minimal film formation temperature (MFFT) of 5-60 °C, more preferably 10-50 °C and still more preferably 20-50 °C.

The polyurethane of the present coating composition may optionally be fatty acid modified or acrylic modified. In one preferred coating composition the polyurethane is not fatty acid modified.

Fatty acid modified polyurethanes preferably comprise unsaturated fatty acids or fatty alcohols within the polyurethane polymer structure.

The fatty acid modified polyurethane optionally present in the coating composition of the present invention preferably has an iodine value of 30-100 g I2/100 g polymer, more preferably 35-80 g I2/100 g polymer and still more preferably 40-70 g I2/100 g polymer, as determined by European Pharmacopoeia (Ph. Eur.) 11th ed. Chapter 2.5.4 - Iodine Value - method A. The unsaturated fatty acid present in the modified polyurethanes is preferably a C8-24, more preferably C12-24 and still more preferably a C14-24 unsaturated fatty acid. The unsaturated fatty acid preferably comprises 1, 2 or 3 double bonds. When multiple double bonds are present, they may be conjugated or nonconjugated. The double bonds may have cis or trans geometry.

Examples of suitable unsaturated fatty acids present in the modified polyurethanes include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soybean fatty acid, tall oil fatty acid, or mixtures thereof. Preferably the unsaturated fatty acid is selected from linolenic, linoleic and oleic acids, soybean fatty acid, tall oil fatty acid, and mixtures thereof.

Preferably a mixture of fatty acids is present in the fatty acid modified polyurethane optionally present in the coating composition. Preferably the fatty acid is derived from natural or synthetic oils and thus the mixture of fatty acids present in the polyurethane reflects the mixture present in the oil. Saturated fatty acids and oils may optionally be present, e.g. butyric acid, lauric acid, myristic acid, palmitic acid or stearic acid. Examples of suitable oils for providing fatty acid groups in polyurethane include linseed oil, soybean oil, rapeseed oil, sunflower oil, palm oil, tung oil, calendula oil, wood oil (e.g. pine oil), safflower oil, tuna fish oil, and combinations thereof. Preferably the oil is selected from wood oil, rapeseed oil, linseed oil, sunflower oil and soybean oil.

Modification of polyurethane with fatty acids may be carried out by conventional methods. Alternatively suitable fatty acid modified polyurethanes are commercially available.

Preferably the fatty acid modified polyurethane present in the coating composition of the present invention has an acid number of 2-50 mgKOH/g polymer, more preferably 5-35 mgKOH/g polymer and still more preferably 15-25 mgKOH/g polymer.

Preferably the fatty acid modified polyurethane present in the coating composition of the present invention has a Mw of 2,000-200,000, preferably 2,500-50,000 and still more preferably 2,500-15,000.

Preferably the fatty acid modified polyurethane present in the coating composition of the invention has a Mn of 1,000-5,000, preferably 1,200-4,000 and still more preferably 1,200-3,000.

Preferably the fatty acid modified polyurethane present in the coating composition of the invention has a polydispersity index (PDI) of 1.0-15.0, more preferably 1.5-10.0 and still more preferably 1.5-3.5.

Acrylic modified polyurethane, also described as (poly)urethane acrylic hybrid or (poly)urethane acrylic copolymer, typically comprise of acrylic monomers, polyfunctional polyols and polyfunctional isocyanates.

The urethane acrylic hybrid may be obtained by reaction of (poly)acrylic polyols and polyfunctional isocyanates, or by graft copolymerization where the polyurethane and polyacrylic chains are grafted on each other, or by physical blending of polyurethane dispersions and acrylic dispersions. Alternatively, urethane acrylic hybrid dispersions may be generated as an interpenetrating polymer network (IPN) wherein the two polymer types are combined by polymerizing and crosslinking in the presence of the other, generating two different polymer structures that are held together by permanent entanglement in which both the polyurethane and the acrylic polymer are present in the same particle.

The acrylic part of the polyurethane acrylic copolymer or hybrid is typically composed of esters of acrylic acid and/or methacrylic acid, commonly described as acrylate and methacrylate respectively. Such esters, which act as building blocks for polymers, are called monomers.

Commonly used acrylic ester monomers include methyl acrylate, ethyl acrylate, n-butyl acrylate, iso-butyl acrylate, tert.-butyl acrylate, 2-ethylhexyl acrylate, 2-hydroxyethyl acrylate, lauryl acrylate, stearyl acrylate, 4.-tert.-butylcyclohexyl acrylate, 3,3,5-trimethylcyclohexyl acrylate, dihydrodicyclopentadienyl acrylate, benzyl acrylate and phenylethyl acrylate.

Commonly used methacrylic ester monomers include methyl methacrylate, ethyl methacrylate, iso-propyl acrylate, n-butyl methacrylate, tert-butyl methacrylate, 2,3-dihydroxypropyl methacrylate, neopentyl methacrylate, n-hexyl methacrylate, 2-ethylhexyl methacrylate, 2-hydroxyethyl methacrylate, 2-hydroxypropyl methacrylate, octyl methacrylate, iso-octyl methacrylate, n-decyl methacrylate, iso-decyl methacrylate, lauryl methacrylate, n-tridecyl methacrylate, iso- tridecyl methacrylate, stearyl methacrylate, cyclohexyl methacrylate, 4-tert.-butylcyclohexyl-methacrylate, 3,3,5-trimethyl-cyclohexyl methacrylate, iso-borneyl methacrylate, benzyl methacrylate, phenyl methacrylate and phenylethyl methacrylate.

The urethane acrylic present in the polyurethane acrylic dispersion may also comprise non-(meth)acrylate monomers, also described as comonomers, to achieve special properties, e.g. adhesion or hardness. Examples of commonly used comonomers include acrylamide, acrylonitrile, methacrylonitrile, styrene, $\alpha$-methyl styrene, vinyl acetate, vinyl toluene, vinyl imidazole, vinyl pyrrolidone, vinyl caprolactam, vinyl carbazole, vinyl esters of versatic acids and/or mixtures thereof.

Modification of polyurethane with polyacrylate may be carried out by conventional methods. Alternatively suitable polyurethane and polyacrylate copolymers are commercially available.

A preferred polyurethane dispersion present in the coating compositions of the present invention comprises a polyurethane acrylic polymer having a Mw of 1000 to 3000000, more preferably 1500 to 200000 and still more preferably 2000 to 100000.

A preferred coating composition of the present invention comprises 1-40 wt%, preferably 2-27 wt%, more preferably 3-20 wt% of polyurethane, based on the total weight of the composition.

A preferred coating composition of the present invention comprise 2-70 wt%, preferably 2-55 wt%, and more preferably 6-40 wt% of polyurethane, based on the solids weight of the compositions.

Alkyd resin

The coating composition of the present invention comprises at least one alkyd resin. Optionally the composition comprises more than one alkyd resin, e.g. 2 or 3 alkyd resins. Preferably, however, the coating composition comprises one alkyd resin.

In the coating composition of the present invention, the alkyd resin is preferably in the form of an alkyd emulsion. Preferably the alkyd resin is dispersed in a continuous water phase or in a continuous water/organic phase. The emulsion may optionally comprise other conventional additives such as surfactants, preservatives, neutralizing agentsand defoamers. The average diameter (Z-average diameter) of the dispersed alkyd resin in the emulsion is preferably 100-1000 nm, more preferably 150-800 nm and still more preferably 150-500 nm. Preferably the amount of alkyd resin in the emulsion is 30-75 wt%, more preferably 35-60 wt%, based on the total weight of the emulsion. The alkyd emulsion present in the coating composition of the present invention preferably comprises 30-75 wt% alkyd droplets and more preferably 40-60 wt% alkyd droplets, based on the total weight of the emulsion.

The alkyd resin present in the coating composition is preferably derived from at least a polycarboxylic acid and/or anhydride, a polyol and an unsaturated fatty acid or oil. Preferably the unsaturated fatty acid or oil is a vegetable oil and/or fatty acids present in vegetable oil. Optionally the alkyd resin is modified by isocyanate to urethane modified alkyd.

The polycarboxylic acid could be a triacid or a diacid. The polycarboxylic acid could be an alkyl polycarboxylic acid or an aromatic polycarboxylic acid. Alkyl polycarboxylic acids include acyclic and cyclic polycarboxylic acids. Typical

polycarboxylic acids are $C_{3-12}$ polycarboxylic acids and more preferably $C_{4-10}$ polycarboxylic acids. The anhydride could typically be a $C_{4-10}$ cyclic anhydride.

Representative examples of suitable polycarboxylic acids include o-phthalic acid, isophthalic acid, adipic acid, succinic acid, terephthalic acid, 1,4-cyclohexanedicarboxylic acid, hexahydrophthalic acid, citric acid, fumaric acid, mesaconic acid, maleic acid, citraconic acid, 5-tert-butyl isophthalic acid, trimellitic acid, pyromellitic acid, 2,2,4-trimethyl adipic acid, azelaic acid, sebacic acid, dimerized fatty acids, cyclopentane-1,2-dicarboxylic acid, cyclohexane-1,2-dicarboxylic acid, 4-methylcyclohexane-1,2- dicarboxylic acid, tetrahydrophthalic acid, endomethylene-cyclohexane-1,2-dicarboxylic acid, butane-1,2,3,4-tetra-carboxylic acid, endoisopropylidene-cyclohexane-1,2-dicarboxylic acid, cyclohexane-1,2,4,5-tetracarboxylic acid, butane-1,2,3,4-tetracarboxylic acid, 1,2-cyclohexanedicarboxylic acid, 1,3-cyclohexanedicarboxylic acid, furandicarboxylic acids, tetrahydrofurandicarboxylic acids, itaconic acid, citraconic acid and dimer fatty acid.

Representative examples of suitable anhydrides include o-phthalic anhydride, succinic anhydride, hexahydrophthalic anhydride, maleic anhydride, trimellitic anhydride, pyromellitic anhydride, cyclopentane-1,2-dicarboxylic anhydride, cyclohexane-1,2-dicarboxylic anhydride, 4-methylcyclohexane-1,2-dicarboxylic anhydride, tetrahydrophthalic anhydride, endomethylene-cyclohexane-1,2-dicarboxylic anhydride, endoisopropylidene-cyclohexane-1,2-dicarboxylic anhydride, 1,2-cyclohexanedicarboxylic anhydride, itaconic anhydride and lactide.

Optionally the alkyd resin further comprises one or more monoacids. Representative examples of monoacids are acetic acid, abietic acid, benzoic acid, cinnamic acid, crotonic acid, dehydroabietic acid, levopimaric acid, neoabietic acid, para-tert-butylbenzoic acid or tiglic acid.

The polyol present in the alkyd resin preferably comprises 2-6 hydroxyl groups. More preferably the polyol could be a diol, triol or tetrol. The polyol is typically an aromatic polyol, an alkyl polyol or a cycloalkyl polyol, e.g. alkyl polyols and cycloalkyl polyols. Typically, alkyl polyols are $C_{2-12}$ polyols or $C_{3-10}$ polyols.

Representative examples of suitable polyols include alkylene glycols, poly(alkylene) glycols, polycarbonate polyols, dihydroxyalkyl-1,3-dioxanes, di(hydroxyalkyl)furans, di(hydroxyalkyl)tetrahydrofurans, 2-alkyl-1,3-propanediols, 2,2-dialkyl-1,3-propanediols, 2-hydroxyalkyl-1,3-propanediols, 2,2-dihydroxyalkyl-1,3-propanediols, 2-alkyl-2-hydroxyalkyl-1,3-propanediols, ethylene glycol, propylene glycol, 1,3-propanediol, 1,4-butylene glycol, 1,3-butylene glycol, neopentyl glycol, 2-butyl-2-ethyl-1,3-propanediol, 1,6-hexane diol, 1,12-dodecane diol, 3-methyl-1,5-pentane diol, 2,2,4-trimethyl-1,6-hexane diol, 2,2-dimethyl-1,3-propane diol, 2-methyl-2-cyclohexyl-1,3-propane diol, 1,4-cyclohexane dimethanol, glycerol, trimethylol ethane, trimethylol propane, pentaerythritol, sorbitol 5,5-dihydroxymethyl-1,3-dioxane, di(hydroxymethyl)furan, di(hydroxymethyl) tetrahydrofuran, spiroglycol (2,4,8,10-tetraoxaspiro[5.5]undecane-3,9-diethanol), isosorbide, isomannide, isoidide, di-glycerol, trimethylolbutane, di-trimethylolethane, di-trimethylolpropane, di-trimethylolbutane, dipentaerythritol, tri-pentaerythritol, anhydroennea-heptitol, mannitol, glycerol mono(meth)allyl ether, di-glycerol di(meth)allyl ether, trimethylolethane mono(meth)allyl ether, trimethylolpropane mono(meth)allyl ether, trimethylolbutane mono(meth)allyl ether, pentaerythritol mono(meth)allyl ether, pentaerythritol di(meth)allyl ether, di-trimethylolethane mono(meth)allyl ether, di-trimethylolethane di(meth)allyl ether, di-trimethylolpropane mono(meth)allyl ether, di-trimethylolpropane di(meth)allyl ether, di-trimethylolbutane mono(meth)allyl ether, and/or di-trimethylolbutane di(meth)allyl ether.

The presence of unsaturated fatty acids in the alkyd allows for room temperature curing (without the need of using a crosslinking agent) by enabling crosslinking with oxygen in the air atmosphere. Advantageously this shortens the total drying time of the coating composition.

The unsaturated fatty acid or oil (unsaturated triglyceride) present in the alkyd resin is preferably a $C_{8-24}$, more preferably a $C_{12-24}$ and still more preferably a $C_{14-24}$ unsaturated fatty acid. The unsaturated fatty acid preferably comprises 1, 2 or 3 double bonds. When multiple double bonds are present, they may be conjugated or nonconjugated. The double bonds may have cis or trans geometry.

The alkyd resin present in the coating composition of the present invention preferably has an iodine value of 30-100 g I2/100 g polymer, more preferably 35-80 g I2/100 g polymer and still more preferably 40-70 g I2/100 g polymer, as determined by European Pharmacopoeia (Ph. Eur.) 11th ed. Chapter 2.5.4 - Iodine Value - method A.

Representative examples of suitable unsaturated fatty acids include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soybean fatty acid, tall oil fatty acid, or mixtures thereof. Typicaly the unsaturated fatty acid is selected from linolenic, linoleic and oleic acids, soybean fatty acid, tall oil fatty acid, and mixtures thereof.

Typically, a mixture of fatty acids will be present in the alkyd resin present in the coating composition. Typically, the fatty acid is derived from natural or synthetic oils and thus the mixture of fatty acids present in the alkyd resin reflects the mixture present in the oil. Saturated fatty acids and oils may optionally be present. Examples of suitable oils for providing fatty acid groups in alkyd resin include linseed oil, soybean oil, rapeseed oil, sun flower oil, palm oil, tung oil, calendula oil, wood oil (e.g. pine oil), safflower oil, tuna fish oil, and combinations thereof. Preferably the oil is selected from rapeseed oil, linseed oil, sunflower oil and soybean oil.

As used herein the term "oil length" is equal to the weight of any fatty acid in the alkyd taken together with the polyol needed to completely esterify the fatty acid, minus the weight of water generated during esterification, expressed as a percentage of the total solids content of the finished alkyd.

Alkyd resins are often characterized by their oil length. Alkyds comprising at least 55 wt% fatty acids are generally referred to as long oil alkyds whilst alkyds comprising less than 40 wt% fatty acids are generally referred to as short oil alkyds. Alkyds with 40-55 wt% fatty acids are generally referred to as medium oil alkyds.The alkyd resin present in the coating compositions of the present invention preferably has an oil length of 25-85 wt%, more preferably 30-60 wt% and still more preferably 30-40 wt%

The alkyd of the present coating composition may optionally be urethane modified. The urethane modified alkyd is modified by isocyanate, preferable an aliphatic isocyanate and/or cycloaliphatic isocyanate. Typically, the isocyanate substitutes some of the commonly used polycarboxylic acid and/or anhydride present in an unmodified alkyd. In one preferred coating composition of the invention, the alkyd is not urethane modified.

Urethane modified alkyds are produced by reacting the alkyd with an isocyanate. A reaction take place between residual hydroxyl groups (-OH) present in the alkyds and -R=N=C=O groups present in the isocyanate to form urethane linkages. The resulting compounds are described as urethane modified alkyds, often shortened to urethane alkyd or polyurethane (modified) alkyd in the case of using a polyisocyanate.

Examples of suitable isocyanates used for production of urethane modified alkyds are hexamethylene diisocyanate (HDI), isophorone diisocyanate (IPDI), bis-(4-isocyanatcyclohexyl)methane (H12MDI), 2,4- and 2,6-toluene diisocyanate (TDI), diphenylmethane 4,4- and/or 2,4-diisocyanate (MDI). Other examples are xylenediisocyanate (XDI), hydrogenated xylylene diisocyanate (H6XDI), 2,2,4-and 2,4,4-trimethyl-1,6-diisocyanateohexane (TMDI), tetramethylxylene diisocyanate (TMXDI), 1,5-pentamethylene diisocyanate, triphenylmethane-4,4',4"-triisocyanate and tris(pisocyanatophenyl)thiophosphate.

The alkyd resins may also comprise other building blocks to improve specific properties, e.g. chemical resistance or adhesion. Examples of other building blocks include styrene, vinyl toluene, methyl (meth)acrylate, isobutyl (meth)acrylate, tert.-butyl (meth)(acrylate, n-butyl (meth)acrylate, and/or blends heroff. Such alkyd resins may be described as e.g. styrene modified alkyds or acrylic modified alkyds depending on building blocks used.

Chemical composition and processing of alkyds is described in Polyester and Alkyd Resin: Technical Basics and Applications by Ulrich Poth, Vincentz Network, 2020. The process of making waterborne alkyds may involve a step of partial or full neutralization of free carboxylic groups with amines as is (e.g. diethanolamine, aminomethylpropanol, dimethylethanolamine, triethylamine, morpholine) or in the form of salts to form anions. Surfactants may also be used.

Alkyd resins that are suitable for incorporation into the compositions of the present invention are commercially available. Alternatively, the alkyd resins may be obtained using conventional synthesis techniques that are well known in the art.

Preferably the alkyd resin in the coating composition of the present invention has an acid number of 1-50 mgKOH/g polymer, more preferably 3-30 mgKOH/g polymer and still more preferably 3-20 mgKOH/g polymer.

Preferably the alkyd resin present in the coating composition of the invention has a Mw of 3,000-300,000, preferably 4,000-70,000 and still more preferably 4,000-25,000. Preferably the alkyd resin present in the coating composition of the invention has a Mn of 1,000-6,000, preferably 1,200-5,000 and still more preferably 1,200-3,500. Preferably the alkyd resin present in the coating composition of the invention has a polydispersity index (PDI) of 1.0-15.0, more preferably 1.5-10.0 and still more preferably 2.0-8.0.

A preferred coating composition of the present invention comprise 1-35 wt%, preferably 1-25 wt%, more preferably 2-15 wt% of alkyd resin, based on the total weight of the composition.

A preferred coating composition of the present invention comprise 2-70 wt%, preferably 2-50 wt%, and more preferably 4-30 wt% of alkyd resin, based on the solids weight of the compositions.

Composite wax

The coating composition of the present invention comprises a composite wax. The coating composition may comprise one or more composite waxes, preferably two or three composite waxes, and more preferably two composite waxes. The presence of composite wax in the coating composition of the present invention, in combination with the polycarbodiimide and the drier, is believed to be critical in providing a coating that is scratch resistant, abrasion resistant and water resistant whilst also generating a smooth, low-friction surface that can be cleaned.

A composite wax comprises, or consists of, two or more components which remain separate and distinct in the composite wax. Thus the two or more components do not merge or dissolve into one other. They are immiscible. Preferably the composite wax comprises at least two, preferably two, immiscible components.

The components of the composite wax may be arranged in a structure, or may be in a random arrangement. Preferably the composite wax has a structure. Preferably the composite wax has a structure which is particles in a matrix or a core-shell type arrangement. In a preferred core-shell arrangement, a first component is distributed on the surface of the second component, i.e. it is present on the surface to form a coating or "shell" thereon. In preferred particles in a matrix arrangement, a first component forms a matrix and the second component is dispersed therein, i.e. within the first component.

In a preferred coating composition of the present invention the composite wax comprises at least two organic components or at least one organic component and at least one inorganic component, and preferably at least one organic component and at least one inorganic component. In preferred composite waxes comprising at least one organic component and at least one inorganic component, preferably the organic components forms a matrix. Preferably the inorganic component is dispersed within the organic matrix.

Representative examples of suitable organic components include polyethylene (e.g. low density polyethylene (LDPE), high density polyethylene (HDPE)) oxidized polyethylene, polypropylene, oxidized polypropylene, polyamide (e.g. Polyamide 6 (Nylon 6), Polyamide 11 (Nylon 11), Polyamide 12 (Nylon 12), Polyamide 46 (Nylon 46), Polyamide 66 (Nylon 66)), carnuba, ethylene-bis-stearamide (EBS), polytetrafluorethylene (PTFE) and/or mixtures thereof.

Representative examples of suitable inorganic components include silica, aluminium oxide, zirconium oxide, carbide, inorganic pigment, graphene, ceramic and/or mixtures thereof.

Preferably the composite wax is not a wax treated silica.

A preferred composite wax present in the coating composition of the present invention comprises, or consists of, at least one (e.g. one or two) organic component and at least one (e.g. one or two) inorganic component. In a preferred composite wax, the inorganic component is distributed on the surface of the organic component and/or the inorganic component is distributed within the organic component. In one preferred composite wax, the inorganic component is distributed on the surface of the organic component. In a more preferred composite wax, the inorganic component is distributed within the organic component. In other words, preferably the inorganic component is present as particles within a matrix of the organic component. When the inorganic component is present within a matrix of the organic component, the average particle size of the inorganic component is preferably 50-500 nm, more preferably 100-450 nm and still more preferably 200-350 nm .

Preferred composite waxes present in the coating composition of the invention comprise:

carnuba and aluminium oxide;
high density polyethylene, carnuba and aluminium oxide;
high density polyethylene and aluminium oxide;
high density polyethylene, polytetrafluorethylene and aluminium oxide;
low density polyethylene and aluminium oxide; or
polyethylene, polypropylene, ethylene-bis-steramide and calcium carbonate,
and more preferably
carnuba and aluminium oxide;
high density polyethylene and aluminium oxide;
low density polyethylene and aluminium oxide; or
polyethylene, polypropylene, ethylene-bis-steramide and calcium carbonate,
and still more preferably
low density polyethylene and aluminium oxide;
polyethylene, polypropylene, ethylene-bis-steramide and calcium carbonate
and blends thereof.

In all of the above composite waxes, the inorganic component is preferably distributed within a matrix of the organic component.

Preferred composite waxes have an average particle size (D50) of 1.0-20 $\mu$m, preferably 2.0-15 $\mu$m and more preferably 4.0-12 $\mu$m.

In a preferred coating composition of the present invention, the total amount of composite wax is 0.1-15.0 wt%, preferably 0.5-7.0 wt%, more preferably 1.0-6.0 wt%, and still more preferably 1.5-5.0 wt% of composite wax, based on the solid content of composite wax present in the total weight of the composition.

Polycarbodiimide

The coating composition of the present invention comprises at least one polycarbodiimide. The coating composition may comprise a mixture of polycarbodiimides, e.g. 2 or 3 polycarbodiimides. Preferably, however, the coating composition comprises one or two, and in particular, one polycarbodiimide. Polycarbodiimides comprising a hydrophilic group are preferred.

In the coating composition of the present invention the presence of the polycarbodiimide in combination with a drier, described below, provides a dual curing mechanism which is believed to contribute to the drastically improved scratch resistance and water resistance of the resulting coatings.

Preferably the polycarbodiimide has a carbodiimide equivalent weight of 100-700 g/equivalent, preferably 150-400 g/equivalent and more preferably 200-300 g/equivalent. This correlates with the fact that preferred polycarbodiimides comprise more than one - N=C=N- group in their structures.

Preferably the polycarbodiimide present in the coating composition is a cross-linking agent. Sometimes they are also referred to as curing agents. The polycarbodiimides have high reactivity with carboxy functional polymers, including those containing fatty acids, and exhibit excellent curing performance. The reaction between carbodiimides and carboxyl groups present in polymers builds a three-dimensional networks of polymer chains. The reaction takes place via the N=C=N groups and the active hydrogen atom of carboxyl groups to form N-acyl ureas and/or anhydride and urea groups.

Preferably the polycarbodiimides present in the coating compositions of the present invention are effective curing agents under acidic conditions, i.e. pH below 7. This avoids reactions when the ingredients are mixed, and stored, typically under alkaline conditions, i.e. pH above 8. When the composition is applied, during drying, the crosslinking reaction starts because of evaporation of water and pH modifier, resulting in a drop in pH and generation of protonated carboxylic acid groups.

The polycarbodiimides present in the coating composition of the present invention are commercially available, or may be prepared by processes described in the art, e.g. as described in WO2022/045025, WO2022/045024, WO2021/059835, WO2020/179836 and WO2018/194102. They may generally be prepared by condensation reaction of diisocyanates or polyisocyanates in the presence of a suitable catalyst forming polymers having terminal isocyanate functionality. Chain extenders, linking or copolymerizing isocyanate functional polycarbodiimides together, may be present before or during polycarbodiimide formation. The isocyanate functional polycarbodiimide is preferably end-capped with hydrophilic compounds that have reactivity with terminal isocyanate groups to obtain improved water-solubility or water-dispersibility when preparing an aqueous dispersion. The polycarbodiimide may further be blocked to increase their storage stability and to obtain a long pot-life, where deblocking takes place during drying phase of the coating composition allowing carbodiimide reaction to progress as described above.

Diisocyanate used for preparation of polycarbodiimides may be of aliphatic or aromatic nature. These may be used solely, or two or more may be used in combination. Examples of suitable diisocyanates used for preparation of polycarbodiimides include aliphatic isocyanates such as hexamethylene diisocyanate, 1,4-tetramethylene diisocyanate, 1,5-diisocyanato-2-methylpentane and lysine diisocyanate; alicyclic diisocyanates such as isophorone diisocyanate, norbornane diisocyanate, hydrogenated tolylene diisocyanate, hydrogenated xylene diisocyanate, hydrogenated diphenylmethane diisocyanate and hydrogenated tetramethylxylene diisocyanate. Further examples include aromatic diisocyanates such as 2,4'-diphenylmethane diisocyanate, 4,4'-diphenylmethane diisocyanate, 4,4'-diphenyl ether diisocyanate, p-phenylene diisocyanate, m-phenylene diisocyanate, 3,3'-dimethoxy-4,4'-biphenyl diisocyanate, o-toluene diisocyanate, naphthalene diisocyanate, 2,4-tolylene diisocyanate, 2,6-tolylene diisocyanate, 3,3'-dimethyl-4,4'-diphenyl ether diisocyanate and 3,3'-dimethyl-4,4'-diphenyl ether diisocyanate.

Examples of suitable catalysts include 1-ethyl-2-phospholene-1-oxide, 1-ethyl-3-phospholine, 1-ethyl-3-methyl-3-phospholine-1-oxide, 1-ethyl-3-methyl-phospholidine-1-oxide, 1-methylphospholen-1-oxide, 3- methyl-1 -phenyl-3-phospholine-1-oxide, 3-methyl-1-phenyl-2-phospholene-1-oxide, 3-methyl-2-phospholene-1-oxide, 1-phenyl-2-phospholene-1-oxide, hydrocarbyl aryl phosphine oxide, camphene phenyl phosphine oxide, and mixtures hereof.

Examples of suitable chain extenders include amines, polyamines, aminoalcohols, mercapto-terminated derivatives, polyols (e.g. diols, triols), polyester polyols, polyether polyols, polycarbonate polyols, hydroxy-containing (meth)acrylic polymers, castor oil polyols or long-chain aliphatic diols.

Examples of suitable hydrophilic compounds used as the end-capping agents are glycol ethers, diamino alcohols, alkyl hydroxycarboxylates, dialkylaminoalkylamines and alkyl sulfonates. Other examples include aliphatic compounds, aromatic compounds and alicyclic compounds having a functional group which reacts with an isocyanate group, e.g. methanol, ethanol, phenol, cyclohexanol, N-methylethanolamine, diethylamine, dicyclohexylamine, butylamine, cyclohexylamine, propionic acid, benzoic acid, cyclohexanecarboxylic acid, ethylmercaptan, allylmercaptan, thiophenol and compounds containing an epoxy group, or mixtures hereof.

Examples of suitable blocking agents for polycarbodiimides include pyrrole compounds, pyrazole compounds, imidazole compounds and triazole compounds, e.g. pyrazole, 3-methylpyrazole, 4-methylpyrazole and 3,5-dimethylpyrazole, imidazole, 2-methylimidazole, 2-ethyl-4-methyl-imidazole, 2-phenylimidazole or 2-phenyl-4-methylimidazole, or mixtures hereof.

In the coating composition of the present invention, the polycarbodiimide is preferably in the form of a dispersion. Preferably the polycarbodiimide is dispersed in a continuous water phase. Preferably the pH of the polycarbodiimide dispersion is ≥8.0 and more preferably 8.0-12. Preferably the amount of polycarbodiimide in the dispersion is 20-60 wt%, more preferably 30-45 wt%, based on the total weight of the dispersion.

In the process of making a waterborne polycarbodiimide dispersion, suitable amines and or surfactants may be incorporated to increase the compatibility and/or storage stability of the polycarbodiimide in the aqueous phase.

Suitable surfactants may be anionic or nonionic. Examples of suitable anionic surfactants include alkylbenzene sulfonates such as sodium dodecylbenzene sulfonate, alkyl sulfates such as sodium dodecyl sulfate and sodium lauryl sulfate, sodium N-cocoyl methyl taurine, sodium di-2-ethylhexyl sulfosuccinate, sodium sulfate-2-ethylhexyl, or $\alpha$-sulfofatty acid methyl ester sodium salt. Examples of suitable nonionic surfactants include polyoxyethylene-2-ethylhexyl ether, polyethylene glycol monomethyl ether, or polyoxyethylene isodecyl ether.

A preferred coating composition of the present invention comprises a total amount of polycarbodiimide of 13-40 wt% and more preferably 15-30 wt% polycarbodiimde (solids), based on the amount of binder (solids).

A preferred coating composition of the present invention comprises a total amount of binder (including polycarbodiimide) (solids) of 6-50 wt%, preferably 10-40 wt% and more preferably 13-30 wt% binder (solids), based on the total weight of the composition

A preferred coating composition of the present invention comprises a total amount of polycarbodiimide of at least 1.0 equivalent carbodiimide group relative to the -COOH groups of the binder, preferably at least 1.4, more preferably 2.0, and still more preferably 2.5. Preferably the total amount of polycarbodiimide is 1.0-10.0, more preferably 1.4-8.0, still more preferably 2.0-6.0 and yet more preferably 2.5-5.0 equivalent carbodiimide group relative to the -COOH groups of the binder.

A preferred coating composition of the present invention comprises a total amount of polycarbodiimide dispersion of 1.5-20.0 wt%, preferably 5.0 to 15.0 wt% and more preferably 7.0-10.0 wt%, based on the total weight of the composition.

A preferred coating composition of the present invention comprises a total amount of polycarbodiimide of 2.0 to 10.0 wt% and more preferably 3.0-5.0 wt% polycarbodiimde (solids), based on the total weight of the composition.

*Drier*

The coating composition of the present invention comprises at least one drier. The drier is different to the curing agent(s).

Preferably the drier is a coordination compound that accelerates the auto oxidation process and crosslinking reaction between molecular oxygen in the air and the double bonds of the unsaturated fatty acids groups present in the polymer. The reaction takes place via a free-radical chemical crosslinking, also described as a redox reaction. The radical chain reaction may be described in terms of initiation, propagation and termination. Reaction involves deactivation of naturally occurring antioxidants, oxygen uptake, and subsequent formation of hydroperoxides that decompose to peroxides and alkoxide radicals. These radicals initiate the polymerization of the unsaturated molecules of the polymer binder. Polymerization occurs through radical termination reactions forming a crosslinked polymer network, causing gelling of the coating, which is followed by drying and hardening. The number of crosslinked sites that are formed determines the coating hardness. Crosslink formation is irreversible.

Preferably the drier is a metal based drying catalyst. Typically the metals that are present in driers are categorized as primary driers, secondary driers and auxiliary driers. Preferably the coating composition of the present invention comprises a primary drier. Preferably the coating composition of the present invention comprises a secondary drier and/or an auxiliary drier. Some preferred coating compositions comprise a primary drier and a secondary drier. Other preferred coating compositions comprise a primary drier and an auxiliary drier. Other preferred coating compositions comprise a primary drier, a secondary drier and an auxiliary drier.

Primary driers are preferably metal based auto oxidation catalysts that predominantly function top-down at the surface of the coating where the oxygen concentration is highest. The most important function for these autoxidation catalysts is hydroperoxide decomposition, thus, primary drier metals typically have two accessible valence states that differ by one electron, which allows for catalytic hydroperoxide decomposition. Preferably the primary drier comprises a metal selected from Cerium (Ce), Cobalt (Co), Iron (Fe), Manganese (Mn), Vanadium (V) and mixtures therof.

Secondary driers are generally active in the crosslinking steps of drying and ensure that a coating dries at a uniform rate throughout the body of the coating, not just at the surface. These driers link fatty acid chains via oxygen-metal-oxygen bridges which leads to cross-links. Preferably the secondary drier comprises a metal selected from Aluminium (Al), Barium (Ba), Bismuth (Bi), Lead (Pb), Neodymium (Nb), Strontium (Sr), Zirconium (Zr) and mixtures thereof.

Typically, auxiliary driers are added to a coating composition to enhance or alter the activity of the primary drier, and thereby improve the appearance and quality of the total coating, e.g. improve drying under non-ideal conditions, reduce sensitivity to wrinkling or reduce loss of drying upon aging. Preferably the auxiliary drier comprises a metal selected from Calcium (Ca), Lithium (Li), Potassium (K), Zinc (Zn) and mixtures thereof.

Preferred coating compositions of the present invention comprise a mixture of driers. More preferably the composition of the present invention comprises a mixture of 2 to 5 driers, and more preferably 3-4 driers. Preferably the mixture of driers comprises 1 to 3 primary driers, and still more preferably 1-2 primary driers in combination with at least one secondary drier and/or at least one auxiliary drier.

Preferred mixtures of metal driers are based on Cobalt and Zirconium (Co/Zr), Cobalt and Strontium (Co/Sr), Cobalt and Aluminium (Co/Al), Cobalt and Barium (Co/Ba), Cobalt and Calcium (Co/Ca), Cobalt and Potassium (Co/K), Cobalt and Barium and Zinc (Co/Ba/Zn), Cobalt and Calcium and Zinc (Co/Ca/Zn), Cobalt and Strontium and Calcium (Co/Sr/Ca), Cobalt and Zirconium and Barium (Co/Zr/Ba), Cobalt and Zirconium and Calcium (Co/Zr/Ca), Cobalt and Zirconium and Lithium (Co/Zr/Li), Cobalt and Zirconium and Zinc (Co/Zr/Zn), Cobalt and Calcium and Zinc and Lithium (Co/Ca/Zn/Li), Cobalt and Zirconium and Strontium and Calcium (Co/Zr/Sr/Ca), Cobalt and Barium and Zinc and Calcium (Co/Ba/Zn/Ca), Cobalt and Zirconium and Calcium and Zinc (Co/Zr/Ca/Zn), Manganese and Zirconium and Calcium (Mn/Zr/Ca), Manganese and Strontium (Mn/Sr), Manganese and Zirconium (Mn/Zr), Manganese and Zirconium and Lithium (Mn/Zr/Li), Manganese and Zirconium and Barium (Mn/Zr/Ba), Iron and Zirconium (Fe/Zr), Iron and Strontium (Fe/Sr), Iron and Calcium (Fe/Ca), Iron and Aluminium (Fe/Al), Iron and Zirconium and Calcium (Fe/Zr/Ca), Iron and Zirconium and Barium (Fe/Zr/Ba), Iron and Zirconium and Lithium (Fe/Zr/Li), Iron and Cobalt and Zirconium (Fe/Co/Zr), Iron and Cobalt and Strontium (Fe/Co/Sr), Iron and Cobalt and Calcium (Fe/Co/Ca), Iron and Cobalt and Aluminium (Fe/Co/Al), Iron and Cobalt and Barium (Fe/Co/Ba), Iron and Cobalt and Potassium (Fe/Co/K), Iron and Cobalt and Barium and Zinc (Fe/Co/Ba/Zn), Iron and Cobalt and Calcium and Zinc (Fe/Co/Ca/Zn), Iron and Cobalt and Strontium and Calcium (Fe/Co/Sr/Ca), Iron and Cobalt and Zirconium and Barium (Fe/Co/Zr/Ba), Iron and Cobalt and Zirconium and Calcium (Fe/Co/Zr/Ca), Iron and Cobalt and Zirconium and Lithium (Fe/Co/Zr/Li), Iron and Cobalt and Zirconium and Zinc (Fe/Co/Zr/Zn), Iron and Manganese and Zirconium and Calcium (Fe/Mn/Zr/Ca), Iron and Manganese and Strontium (Fe/Mn/Sr), Iron and Manganese and Zirconium (Fe/Mn/Zr), Iron and Manganese and Zirconium and Lithium (Fe/Mn/Zr/Li), Iron and Manganese and Zirconium and Barium (Fe/Mn/Zr/Ba), Iron and Cobalt and Calcium and Zinc and Lithium (Fe/Co/Ca/Zn/Li), Iron and Cobalt and Zirconium and Strontium and Calcium (Fe/Co/Zr/Sr/Ca), Iron and Cobalt and Barium and Zinc and Calcium (Fe/Co/Ba/Zn/Ca), Iron and Cobalt and Zirconium and Calcium and Zinc (Fe/Co/Zr/Ca/Zn), or mixtures hereof.

More preferred mixtures of metal driers are Cobalt and Strontium and Calcium (Co/Sr/Ca), Cobalt and Zirconium and Barium (Co/Zr/Ba), Cobalt and Zirconium and Calcium (Co/Zr/Ca), Cobalt and Zirconium and Lithium (Co/Zr/Li), Cobalt and Zirconium and Strontium and Calcium (Co/Zr/Sr/Ca), Iron and Zirconium and Calcium (Fe/Zr/Ca), Iron and Zirconium and Barium (Fe/Zr/Ba), Iron and Zirconium and Lithium (Fe/Zr/Li), Iron and Cobalt and Zirconium (Fe/Co/Zr), Iron and Cobalt and Strontium (Fe/Co/Sr), Iron and Cobalt and Calcium (Fe/Co/Ca), Iron and Cobalt and Strontium and Calcium (Fe/Co/Sr/Ca), Iron and Cobalt and Zirconium and Barium (Fe/Co/Zr/Ba), Iron and Cobalt and Zirconium and Calcium (Fe/Co/Zr/Ca), Iron and Cobalt and Zirconium and Lithium (Fe/Co/Zr/Li), or mixtures hereof.

Driers are typically present in the form of compounds, polymers, organometallic polyvalent salts or metal soaps, and mixtures thereof containing metals mentioned above. When the drier is in salt form, the afore-mentioned metals preferably form the cation and halides, nitrates, sulphates, carboxylates form the anion.

Preferred driers are metal carboxylates formed by the reaction of metallic raw material and organic carboxylic acid(s), also described as metal organics and metal soaps. Examples of carboxylates includes acetates, ethylhexanoates, octoates, octanoates, naphthenates, acetoacetonates, fatty acids (unsaturated oleates), neodecanoate and isononanoate.

Driers, typically metal carboxylates, may also contain certain organic accelerators, or ligands, that boost drying performance and enhance final coating properties. The ligand functions by chelating with the metal, which increases the activity of the metal toward decomposing peroxides, hence reducing drying time and prevent of loss of drying of pigmented coatings upon aging. Loss of drying means that drying times of coatings are prolonged after a certain storage time. Loss of drying can be related to inactivation of the drier. This may have several reasons, such as adsorption of the drier on the pigment surface, formation of insoluble drier complexes in the coating composition or drier hydrolysis.

The most preferred driers are based on a mixture of 2 or 3 metals selected from Cobalt, Zirconium, Lithium, and Iron. Still more preferably the driers are in the form of polymers, organometallic polyvalent salts or metal soaps, and mixtures thereof, as hereinbefore described. Even more preferably the driers are based on a mixture of 2 or 3 metals selected from Cobalt, Zirconium, Lithium, and Iron, wherein the driers are in the form of polymers, organometallic polyvalent salts or metal soaps, and mixtures thereof, as hereinbefore described.

Driers suitable for use in the present invention are commercially available. Examples of commercially available driers are Additol VXW4940 N, Additol VXW 6206, Additol XW 6566, Additol Dry CF100, Additol Dry CF200, Additol Dry CF300, Borchi OXY-Coat, Ecos Co 2 Zr 3 Neo, Ecos ND 15 aqua, Ecos ND 15, Ecos Mix 203 Neo, Ecos Mix 236 Neo Aqua, Ecos Mix 353 Neo Aqua, Ecos Mix 265 Neo Aqua, Egedry Prime, Nuodex Combi QS, Nuodex WEB Combi AQ, Octa-Soligen 123 aqua, Octa-Soligen 144 aqua, Octa-Soligen 421 aqua, Octa-Soligen Zirconium 10 aqua, Octa-Soligen 22% ZINC HEX-CEM, Octa-Soligen Calcium 10, basic, Borchers Dry 0511 - Ca 4 aqua, Octa-Soligen® Iron 7/8, Octa-Soligen Lithium 2 and Octa-Soligen Strontium 10.

A preferred coating composition of the present invention comprises a total amount of drier of 0.0001-1.0 wt%, preferably 0.0002-0.6 wt% and more preferably 0.0003-0.40 wt% of drier, based on the solid content of drier present in the total weight of the composition.

Preferred coating compositions of the present invention comprise 0.0001-1.0 wt%, more preferably 0.0001-0.6 wt% and still more preferably 0.0001-0.3 wt% of metal (from the drier) based on the total amount of binder (solid) present in the total weight of the composition.

Water

The coating composition of the present invention comprises water.

In a preferred coating composition of the present invention, the total amount of water is 10-90 wt%, preferably 25-75 wt% and more preferably 35-70 wt% water, based on the total weight of the composition.

The water present in the coating composition derives from the polyurethane and/or the alkyd, which typically have an aqueous continuous phase, other components present in the composition which are supplied in water and water which is added to the overall mixture. Optionally, water may be added immediately prior to application. The water added to the overall mixture forming the composition is preferably desalinated water, or soft or pure tap water. Preferably the pH of the water is 6.0-8.0.

Matting agent

The coating composition of the invention optionally comprises a matting agent. Matting agents are used to modify the surface of coatings by primarily reducing the surface gloss but can also provide additional mechanical properties. Typically a matting agent is more efficient in gloss reduction than traditional inorganic fillers and is efficient for gloss reduction in low or medium PVC (pigment volume concentration) compositions.

The matting agent present in the coating composition of the invention may be organic or inorganic. Commonly used matting agents include silica, glass microspheres, ceramic microspheres and organic microspheres. Microspheres may be solid or hollow.

Examples of suitable organic microspheres are microspheres of polymethylmethacrylate (PMMA), methyl methacrylate ethyleneglycol dimethacrylate copolymer (PMMA-PEGDMA), polybutylacrylate (PBA), polystyrene, polyacrylamide, polymethylurea and polyurethane particles. These particles are typically crosslinked. Other examples are polyacrylonitrile, polyamide, poly(vinyl ester), poly(vinyl halide), poly(vinylidene halides) and waxes composed of high density polyethylene, low density polyethylene, oxidized polyethylene, polypropylene, oxidized polypropylene, polyamide, ethylene-bis-stearamide (EBS), polytetrafluorethylene (PTFE) and/or mixtures thereof. These are preferably solid. The organic microspheres are optionally present in micronized powder form and/or in the form of paste, slurry or aqueous solution. Preferably the organic microspheres are selected from polymethylmethacrylate (PMMA), methyl methacrylate ethyleneglycol dimethacrylate copolymer (PMMA-PEGDMA) and polyurethane.

Silica, ceramic and/or glass microspheres may be used together with organic microspheres for efficient gloss reduction at a minimum amount incorporated.

Preferably the matting agent is selected from solid organic microspheres, solid glass microspheres and solid ceramic microspheres.

In a preferred coating composition of the present invention the average particle size (D50) of matting agent is 1.0-20.0 $\mu$m, more preferably 2.0-15.0 $\mu$m and still more preferably 4.0-10.0 $\mu$m.

A preferred coating composition of the present invention comprises a total amount of 0.10-10.0 wt%, more preferably 0.5-7.0 wt% and still more preferably 1.0-5.0 wt% of matting agent, based on the solid content of matting agent present in the total weight of the composition

Rheology modifier

The coating composition of the present invention optionally comprises one or more rheology modifiers. A different term used for rheology modifier is thickener. Preferably the coating composition comprises a rheology modifier. Still more preferably the coating composition of the invention comprises a mixture of at least 2 and optionally 3 rheology modifiers. The presence of rheology modifier in the composition of the invention advantageously improves the storage stability, the body of the coating composition and the application properties of the coating.

Different types of rheology modifiers are effective at different shear rate, e.g. low or medium or high shear rate. Low shear rheology modifiers are effective against sagging, anti-settling and affect the flow and levelling of the coating composition. Medium shear rheology modifiers are effective for giving the coating composition appropriate viscosity for good consistency in the can, brush and roller loading, stirring, pumping and pouring. High shear rheology modifiers are important to give appropriate viscosity during production and application with brush or roller (to efficiently apply and transfer the desired film thickness on the substrate). Commercially available rheology modifiers are commonly referred to as low, medium or high shear rheology modifiers. A preferred coating composition of the present invention comprise a mix of a high and a medium shear rheology modifier.

The rheology modifier present in the coating composition of the invention is preferably a polysaccharide rheology modifier, an associative rheology modifier, a clay or a mixture thereof. Cellulosic rheology modifiers (e.g. hydroxyethyl cellulose) may also be used. A particularly preferred composition of the invention comprises a mixture of associative rheology modifiers.

Exemplary polysaccharide rheology modifiers for use in the coating compositions include alginin, guar gum, locust bean gum and xanthan gum.

Exemplary clay rheology modifiers for use in the coating compositions of the invention include kaolin clay, smectite clay, illite clay, chlorite clay, synthetic clay or organically modified clay.

Exemplary associative rheology modifiers for use in the coating compositions include non-ionic synthetic associative rheology modifier (niSAT), hydrophobically modified ethoxylated urethanes (HEUR), hydrophobically modified alkali-swellable emulsions (HASE), and styrene-maleic anhydride terpolymers (SMAT). Acidic acrylate copolymers (cross-linked) of ethyl acrylate and methacrylic acid, and acrylic terpolymers (cross-linked) of ethyl acrylate, methacrylic acid, and nonionic urethane surfactant monomer may also be used as associative rheology modifiers. Particularly preferred associative rheology modifiers present in the coating compositions of the invention are hydrophobically modified ethoxylated urethanes (HEUR) or hydrophobically modified alkali-swellable emulsions (HASE). Particularly preferred compositions of the invention comprise a mixture of two different hydrophobically modified ethoxylated urethanes (HEUR). When one or more suitable associative rheology modifiers are used, the thickening reaction is caused in part by either association between the associative rheology modifier and at least one other particle of the coating composition (e.g., a pigment particle or polymer particle) or another associative rheology modifier molecule.

A preferred coating composition of the present invention comprises a total of 0.05 to 6.0 wt% rheology modifier and still more preferably 0.1-4.0 wt% rheology modifier, based on the total weight of the composition.

Wetting and/or dispersing agent

The coating composition of the present invention optionally, and preferably, comprises a wetting and/or dispersing agent. Wetting and dispersing agents are typically added to disperse and stabilize pigments and fillers in the coating composition. Wetting and dispersing agents are often also referred to as surfactants.

A wide range of wetting and dispersing agents is commercially available, and may be used in the coating composition of the invention. Suitable wetting and dispersing agents include conventional anionic, cationic, non-ionic and amphoteric dispersing agents as well as combinations thereof. Preferably a mixture of wetting and dispersing agents is used.

Another type of wetting agent is a substrate wetting agent. An example of a suitable substrate wetting agent is polyether modified polysiloxane.

A preferred coating composition of the present invention comprises a total of 0.05-3.0 wt% wetting and dispersing agent and more preferably 0.1-2.0 wt%, based on the total weight of the composition.

Foam control agent

The coating composition of the present invention optionally, and preferably, comprises a foam control agent. Foam control agents are sometimes also referred to as defoamers.

A wide range of foam control agents are commercially available, and may be used in the coating composition of the invention. Representative examples of suitable foam control agents include organic siloxanes, polyethers, polyether-modifed silicones, mineral oils and combinations thereof.

A preferred coating composition of the present invention comprises a total of 0.1-1.0 wt%, and more preferably 0.1-0.6 wt% foam control agent, based on the total weight of the composition.

Biocide

The coating composition of the present invention optionally comprises a biocide. The terms biocide, antimicrobial agent, biologically active compounds, film preservative, in can preservative and toxicant is used in the industry to describe known compounds that act to prevent biological growth, e.g. growth of mould, algae, bacteria and the like. The biocide may be inorganic, organometallic or organic. Preferred biocides present in the coating composition of the invention are organic agents. Suitable biocides are commercially available.

The coating composition of the present invention optionally comprise in can preservative (PT 6). Mixtures of different biocides may also be employed. A preferred composition of the present invention comprises at least one in can preservative.

Representative examples of suitable in can preservatives that may be present in the coating compositions of the present invention include:

Isothiazolines: Reaction mass of 5-chloro-2-methyl-4-isothiazolin-3-one and 2-methyl-2H-isothiazol-3-one (3:1) (CIT/MIT) (PT6, 0.0001-0.01 % (1-100 ppm)); 5-chloro-2-methyl-4-isothiazolin-3-one (CIT) (PT6, 0.0001-0.01% (1-100 ppm)); 2-Methyl-4-isotiazolin-3-one (MIT)(PT6, 0.0001-0.05 (1-500 ppm)); 2-Methyl- 1 ,2-Benzisothiazol-3(2H)-one (MBIT)(PT6, 0.0001-0.05 (1-500 ppm)); 1,2-Benzisothiazolin-3-one (BIT)(PT6, 0.0001-0.05 (1-500 ppm)); 2-Octyl-2H-isothiazol-3-one (OIT)(PT6, 0.0001-0.5% (1-5000 ppm)); 2-butyl-benzo[d]isothiazol-3-one (BBIT)(PT6, 0.0001-0.5% (1-5000 ppm));

Amides/Ureas: Benzamide, 2,2'-dithiobis (DTBMA)(PT6, 0.0001-0.05% (1-500 ppm)), 2,2-dibromo-2-cyanoacetamide (DBNPA)(PT6, 0.0001-0.05% (1-500 ppm));

Pyrithiones: Zinc pyrithione (ZnPT)(PT6, 0.0001-0.05% (1-500 ppm)); Sodium pyrithione (NaPT)(PT6, 0.0001-0.05% (1-500 ppm));

Organohalogens: 2-Bromo-2-nitro-1,3-propanediol (Bronopol)(PT6, 0.001-0.05% (1-500 ppm);

Carbamates: 3-iodo-2-propynylbutylcarbamate (IPBC)(PT6, 0.01-0.5% (100-5000 ppm));

Silver chemistry: Reaction mass of titanium dioxide and silver chloride (PT6, 0.0001-0.5% (1-5000 ppm)); and Formaldehyde donor/CFhO adducts: N,N-Methylenebismorpholine (MBM)(PT6, 0.0001-0.5% (1-5000 ppm)); (ethylenedioxy)dimethanol (EDDM) (PT6, 0.0001-0.5% (1-5000 ppm)); a, a', a"-trimethyl-1,3,5-triazine-1,3,5(2H,4H,6H)-triethanol (HPT); 3,3'- methylenebis[5-methyloxazolidine] (Oxazolidin/MBO) (PT6, 0.0001-0.5% (1-5000 ppm)); Sodium N-(hydroxymethyl)glycinate; Tetrahydro-1,3,4,6- tetrakis(hydroxymethyl)imidazo[4,5-d]imidazole-2,5(1 H,3H)-dione (TMAD)(PT6,0.0001-0.5% (1-5000 ppm)); Tetrakis(hydroxymethyl)phosphonium sulphate(2:1) (THPS) (PT6, 0.0001-0.5% (1-5000 ppm)); Methenamine 3-chloroallylochloride (CTAC)(PT6, 0.0001-0.5% (1-5000 ppm)); 2,2',2"-(hexahydro-1,3,5-triazine-1,3,5- triyl)triethanol (HHT)(PT6, 0.0001-0.5% (1-5000 ppm)); 1,3-bis(hydroxymethyl)-5,5- dimethylimidazolidine-2,4-dione (DMDMH)(PT6, 0.0001-0.5% (1-5000 ppm)); 7a- ethyldihydro-1 H,3H,5H-oxazolo[3,4-c]oxazole (EDHO)(PT6, 0.0001-0.5% (1-5000 ppm)); cis-1-(3-chloroallyl)-3,5,7-triaza-1-azoniaadamantanechloride (cis CTAC)(PT6, 0.0001-0.5% (1-5000 ppm)); (benzyloxy)methanol(PT6, 0.0001-0.5% (1-5000 ppm)).

A preferred coating composition of the present invention comprises a total amount of biocide of 0.01-2.0 wt%, more preferably 0.05-1.5 wt% and still more preferably 0.1- 1.0 wt%, based on the total weight of the composition. It should be understood that the optimal amount of biocide varies depending on which type and/or combination of biocide is employed.

pH modifier

The coating composition of the present invention optionally, and preferably, comprises a pH modifier. This compound ensures that the pH of the coating composition is $\geq 8.0$. Preferably the composition has a pH of $\geq 8.5$, preferably 8.0-12.0, more preferably 8.0-11.0, and still more preferably 8.5-10.0.

Examples of suitable pH modifiers include oxides and hydroxides of alkali metals (e.g. lithium, potassium or sodium), and amines such as ammonia, diethanolamine, aminomethylpropanol, dimethylethanolamine, triethylamine and 2-aminopropanol or salts thereof.

Preferred pH modifiers are amines or salts thereof (e.g. ammonia, diethanolamine, aminomethylpropanol, dimethylethanolamine, triethylamine and 2-aminopropanol or salts thereof).

A preferred coating composition of the present invention comprises a total amount of pH modifier of 0.05-1.0 wt%, more preferably 0.05-0.6 wt% and still more preferably 0.05-0.4 wt%, based on the total weight of the composition.

Colour pigment, including TiO2

Optionally the coating composition comprises one more colour pigments. Depending on which colour is desired, different types and amounts of colour pigments are preferred. The coating composition may comprise at least 2 colour pigments or at least 3 colour pigments. The coating composition may comprise 2-8 colour pigments, such as 3-6 colour pigments.

Optionally the coating composition comprises $TiO_2$ as a colour pigment. $TiO_2$ is preferred in coating compositions where a relatively light colour is desired. When $TiO_2$ is present it is preferably incorporated into the coating composition during its general preparation.

Preferably the other colour pigments (i.e. those other than TiO2) are incorporated into the coating composition in a post addition step, more preferably with a multicolour tinting system. This is highly advantageous as it means the coating composition can be coloured, as desired, shortly before purchase.

Representative examples of suitable colour pigments include inorganic pigments, organic pigments or a mixture thereof.

Representative examples of suitable inorganic pigments include metal oxides (e.g. iron oxides, chrome oxides etc.), Complex Inorganic Colour Pigments (CICPs) (e.g. chromium and nickel titanate, cobalt blue and green aso), cadmium pigments, lead chromates, bismuth vanadate pigments, zinc sulfide, zinc oxide, and carbon black.

Representative examples of classes of suitable organic pigments include azo pigments and polycyclic pigments.

Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments, anthanthrone, pyrazolo quinazolone and diketo-pyrrolo-pyrrol pigments.

Specific examples of non-white coloured pigments include iron oxides, zinc sulfide, chromium oxide green, cadmium pigments, naphthol red, phthalocyanine compounds (e.g. phthalocyanine green, phthalonitrile blue), ultramarine blue azo pigments and carbon black. A huge range of suitable pigments are commercially available.

Preferably the total amount of $TiO_2$ present in the coating composition is 0-30 wt%, and more preferably 0-25 wt% based on the total weight of the coating composition. Some coating compositions, e.g. those of relatively dark colour, comprise 0-20 wt%, more preferably 0-15 wt% and still more preferably 0-10 wt% of $TiO_2$, based on the total weight of the coating composition.

The amount of colour pigments vary depending on chosen colour. The total amount of colour pigments (i.e. those other than $TiO_2$) present in the coating composition may be 0.01-10.0 wt%, preferably 0.05-7.0 wt% and more preferably 0.1-6.0 wt%, based on the total weight of the coating composition.

Inorganic filler

The coating composition of the present invention optionally comprises one or more inorganic fillers. Suitable inorganic fillers are commercially available.

Nepheline syenite, wollastonite, diatomaceous earth, perlite, kaolin, quartz, talc, mica, dolomite, carbonates (e.g. calcium carbonate) and sulphates (e.g. barium sulphate) are examples of suitable inorganic fillers for the coating composition of the present invention. Inorganic fillers may be used to increase the volume or bulk of a coating composition. Typically, inorganic fillers are substantially insoluble in the coating composition, and are dispersed therein. If inorganic fillers are added at high concentrations (e.g. close to or above critical PVC) or as coarse particles these may give a surface gloss reduction. However, the inorganic fillers are not regarded as matting agents in the present invention.

In a preferred coating composition of the present invention the average particle size (D50) of the inorganic filler is 1.0-15.0 $\mu$m, more preferably 1.0-10.0 $\mu$m and still more preferably 2.0-6.0 $\mu$m.

A preferred coating composition of the present invention comprises 0.5-20.0 wt%, more preferably 3.0-15.0 wt% and still more preferably 5.0-10.0 wt% of inorganic filler.

Other Binders

Additional binders may optionally be added to the coating compositions of the present invention. Examples of suitable binders include silicones, fluoropolymers, polystyrene, polyacrylics, polyvinyl (e.g. poly(ethylene-vinyl acetate), poly vinyl acetate (meth)acrylic) and polyolefins.

Preferably the total amount of other binders present in the compositions of the invention is 0-15 wt%, more preferably 0-10 wt% and still more preferably 0-5.0 wt%, based on the total weight of the composition.

Organic solvent

The coating composition optionally comprises an organic solvent. The solvent present may derive from components present in the composition that are provided in solvents and/or from solvent added into the composition. The solvent is preferably volatile. Suitable solvents present in the coating composition of the invention are commercially available.

Examples of suitable organic solvents and thinners are monopropylene glycol, ethylene glycol methyl ether acetate, diethylene glycol n-butyl ether acetate, propylene glycol methyl ether acetate; ethers such as dipropylene glycol butyl ether, dipropylene glycol propyl ether, dipropylene glycol monomethyl ether, propylene glycol propyl ether, propylene glycol butyl ether, ethylene glycol monobutyl ether, diethylene glycol monobutyl ether, ethylene glycol dimethyl ether, diethylene glycol dimethyl ether, dibutyl ether, dioxane, tetrahydrofuran; alcohols such as propylene glycol; ether alcohols such as butoxyethanol, 1-methoxy-2-propanol; ester alcohols such as 2,2,4-trimethyl-1,3-pentanediol monoisobutyrate (texanol), aliphatic hydrocarbons such as white spirit; and optionally a mixture of two or more solvents and thinners.

If an organic solvent is present in the coating composition of the invention, the organic solvent is preferably selected from monopropylene glycol, dipropylene glycol mono methyl ether, dipropylene glycol butyl ether and mixtures thereof. The presence of an organic solvent gives a longer open time and therefore allows for adjustments during application. The open time is the time available for adjustment of the wet coating surface without giving any inhomogeneities or visible brush or roller marks on the coating surface. When the open time has passed enough water and/or organic solvent have evaporated so adjustments is no longer possible without giving visible marks.

The amount of organic solvent present in the coating composition is preferably as low as possible as this minimizes the VOC content. Preferably organic solvent is present in the coating composition in an amount of 0-14.0 wt%, more preferably 0-10.0 wt% and still more preferably 0-7.0 wt% based on the total weight of the coating composition. The skilled person will appreciate that the organic solvent content will vary depending on the other components present.

Additives

The coating composition optionally comprises one or more other additives. Examples of other components that can be added to the coating composition are adhesion promotors, UV stabilisers (e.g. hindered amine light stabilisers), UV absorbents, water softeners (e.g. sodium hexametaphosphate), antioxidants, anti-static agents, anticorrosive agents, flash rust agents and flame retardant agents.
Optionally the coating composition comprises UV stabilisers (e.g. hindered amine light stabilisers). Optionally the coating composition comprises UV absorbents. Optionally the coating composition comprises adhesion promotors.
Preferably the total amount of additives present in the coating composition is 0.05-5.0 wt%, more preferably 0.1-4.0 wt% and still more preferably 0.1-3.5 wt%, based on the total weight of the coating composition.

Overall composition

A preferred coating composition of the present invention, and in particular, a preferred one-component coating composition, comprises:

(i) a polyurethane;
(ii) an alkyd;
(iii) at least 0.2 wt% composite wax, based on the total weight of the composition;
(iv) a polycarbodiimide;
(v) a drier;
(vi) water;
(vii) matting agent;
(viii) rheology modifier;
(ix) wetting and/or dispersing agent; and
(x) foam control agent;

wherein the weight ratio of said polyurethane to said alkyd is 85:15 to 30:70, and said composition has a pH of $\geq 8.0$, and preferably $\geq 8.5$. Preferably the pH of the composition is 8.0-12.0, more preferably 8.0-11.0, and still more preferably 8.5-10.0.
A further preferred coating composition of the present invention, and in particular a preferred one-component coating composition comprises:

(i) 1-40 wt%, preferably 2-27 wt% of a polyurethane;
(ii) 1-35 wt%, preferably 1-25 wt%, of an alkyd;
(iii) at least 0.2 wt%, preferably 1.0-6.0 wt%, more preferably 1.5-5.0 wt%, composite wax, based on the total weight of the composition;
(iv) 5.0-15.0 wt%, preferably 7.0-10.0 wt% polycarbodiimide;
(v) 0.0002-0.6 wt%, preferably 0.0003-0.4 wt% drier;
(vi) 25-75 wt%, preferably 35-70 wt% water;
(vii) 0.5-7.0 wt%, preferably 1.0-5.0 wt% matting agent;
(viii) 0.05-6.0 wt%, preferably 0.1-4.0 wt% rheology modifier;
(ix) 0.05-3.0 wt%, preferably 0.1-2.0 wt% wetting and/or dispersing agent; and
(x) 0.1-1.0 wt%, preferably 0.1-0.6 wt% foam control agent;

wherein the weight ratio of said polyurethane to said alkyd is 85:15 to 30:70, said composition has a pH of $\geq 8.0$, preferably $\geq 8.5$, and more preferably 8.5-10.0 and said wt% is based on the total weight of the composition.
A further preferred coating composition of the present invention, and in particular a preferred one-component coating composition comprises:

(i) 1-40 wt%, preferably 2-27 wt% of a polyurethane;
(ii) 1-35 wt%, preferably 1-25 wt%, of an alkyd;
(iii) at least 0.2 wt%, preferably 1.0-6.0 wt%, more preferably 1.5-5.0 wt% composite wax, based on the total weight of the composition;

(iv) 5.0-15.0 wt%, preferably 7.0-10.0 wt% polycarbodiimide;

(v) 0.0002-0.6 wt%, preferably 0.0003-0.4 wt% drier;

(vi) 25-75 wt%, preferably 35-70 wt% water;

(vii) 0.5-7.0 wt%, preferably 1.0-5.0 wt% matting agent;

(viii) 0.05-6.0 wt%, preferably 0.1-4.0 wt% rheology modifier;

(ix) 0.05-3.0 wt%, preferably 0.1-2.0 wt% wetting and/or dispersing agent;

(x) 0.1-1.0 wt%, preferably 0.1-0.6 wt% foam control agent;

(xi) 0.05-1.5 wt%, preferably 0.1-1.0 wt% biocide;

(xii) 0-30 wt%, preferably 0-25 wt% $TiO_2$;

(xiii) 0.05-0.6 wt%, preferably 0.05-0.4 wt% pH modifier;

(xiv) 0.05-7.0 wt%, preferably 0.1-6.0 wt% colour pigment; and

(xv) 3.0-15.0 wt%, preferably 5.0-10.0 wt% inorganic filler

wherein the weight ratio of said polyurethane to said alkyd is 85:15 to 30:70, said composition has a pH of $\geq 8.0$, preferably $\geq 8.5$, and more preferably 8.5-10.0 and said wt% is based on the total weight of the composition.

A preferred coating composition of the present invention is curable at ambient temperature, and preferably is curable in the temperature range 5-50 °C. Still more preferably the coating composition of the present invention is curable in the temperature range 5-40 °C, more preferably 10 to 35 °C and still more preferably 15 to 35 °C. Preferably the coating composition is curable in air having a relative humidity of 10-100%, such as 15-78 %.

A preferred coating composition of the present invention has a solids content of at least 30 wt%, preferably at least 35 wt% and more preferably at least 40 wt%.

A preferred coating composition of the present invention has a pigment volume concentration (PVC) below the critical PVC. The pigment volume concentration (PVC) is preferably 5-70, more preferably 5-50 and still more preferably 10-50. Preferably PVC is determined as described in the Test method description.

A preferred coating composition of the present invention has a VOC content of less than 150 g/L, preferably less than 120 g/L and more preferably less than 110 g/L. The VOC is preferably calculated as described in the examples section herein. Alternatively VOC can be determined by analysing the coating composition according to ISO 11890-2:2013. From the analytical measurement data the VOC content is calculated in g/L. The density of the coating composition is measured with the appropriate density determination method (ISO 2811-1 :2016).

A low shear viscosity at low shear rates is typically indicative of good flow and levelling properties, which are important for production of aesthetically pleasing coatings, e.g. no orange peel or brush marks. Hence a preferred coating composition has a rheological profile defined by at least two, preferably at least three and more preferably all four of the following criteria:

shear viscosity of 1000-6000 cp at 2 s$^{-1}$;
shear viscosity of 500-4000 cp at 10 s$^{-1}$;
shear viscosity of 500-3000 cp at 100 s$^{-1}$; and
shear viscosity of 200-1000 cp at 3500 s$^{-1}$.

A further preferred coating composition has a rheological profile defined by at least two, preferably at least three and more preferably all four of the following criteria:

shear viscosity of 1000-4000 cp at 2 s$^{-1}$;
shear viscosity of 1000-3000 cp at 10 s$^{-1}$;
shear viscosity of 500-2500 cp at 100 s$^{-1}$; and
shear viscosity of 300-800 cp at 3500 s$^{-1}$.

A yet further preferred coating composition has a rheological profile defined by at least two, preferably at least three and more preferably all four of the following criteria:

shear viscosity of 1500-3000 cp at 2 s$^{-1}$;
shear viscosity of 1500-2500 cp at 10 s$^{-1}$;
shear viscosity of 1000-2000 cp at 100 s$^{-1}$; and
shear viscosity of 300-600 cp at 3500 s$^{-1}$.

Preferably the rheological profile of the coating composition, as defined above, is determined by the following method: A Malvern Kinexus rheometer is used to collect flow curves that hold information on shear viscosity (mPa.s) at shear rates ranging from 0.1 s$^{-1}$ to 5000 s$^{-1}$. Flow curve measurements are performed at a temperature of 23 °C with 20 mm plate geometry and a gap of 200 $\mu$m. The samples are tempered in a 23 °C 50% RH climate room for at least 18 hours prior to flow curve measurements. A 130 $\mu$l application frame is used to apply sample droplets of consistent size. Each sample is measured three times and the mean viscosity value at different shear rates is calculated based on this.

A preferred coating composition has a Cone & Plate viscosity of 50-600, preferably 100-400, and more preferably 150-300 cP. Preferably Cone & Plate viscosity is determined as follows: The viscosity of the coating compositions is determined according to ISO 2884-1:2006 using a Cone and Plate viscometer set at a temperature of 23 °C, working at a shear rate of 10000 s$^{-1}$, providing a viscosity measurement range of 0-10 P. The samples are tempered in a 23 °C 50% RH climate room for at least 18 hours prior to viscosity measurements. The result given is the average of three measurements. A Brookfield CAP 1000+ Viscometer with spindle CAP02 is used.

A preferred coating composition has a Stormer viscosity of 60-150, preferably 70-130, and more preferably 80-120 KU. Preferably Stormer viscosity is determined as follows: The consistency of the coating compositions is determined according to ASTM D562-10(2014) Method B using a digital Stormer-type viscometer. The measurements are collected from samples in 1 L containers. The samples are tempered in a 23 °C 50% RH climate room for minimum 18 hours prior to viscosity measurements..

A preferred coating composition has a drying time (T4) of 15 min - 6 hours, preferably 20 min - 4 hours, and more preferably 30 min to 2 hours. Preferably drying time (T4) is determined as described in the Test method description.

A preferred coating composition has a gloss at 85° of 1-99, preferably 2-50, and more preferably 3-30. Preferably gloss at 85° is determined as described in the Test method description.

A preferred coating composition has a scratch resistance of at least 90 g/$\mu$m. More preferably the coating composition has a scratch resistance of at least 100, more preferably at least 105 and still more preferably at least 110 g/$\mu$m. Preferably scratch resistance is determined as described in the Test method description.

A preferred coating composition has an abrasion resistance of below 180, more preferably below 160 and still more preferably below 150 mg. More preferably the coating composition has an abrasion resistance below 110 mg, and even more preferably below 100 mg. Preferably abrasion resistance is determined as described in the Test method description.

A preferred coating composition has a water resistance of 8-10, more preferably 9-10 and still more preferably 10. Preferably water resistance is determined as described in the Test method description.

A preferred coating composition has an adhesion of at least 2.0, more preferably at least 3.0 and still more preferably at least 3.5 MPa. Preferably adhesion is determined as described in the Test method description.

Manufacture and containers

The present invention also relates to a method for preparing a composition as hereinbefore defined, comprising mixing:

(i) a polyurethane;
(ii) an alkyd;
(iii) at least 0.2 wt% composite wax, based on the total weight of the composition;
(iv) a polycarbodiimide;
(v) a drier; and
(vi) water.

Any conventional mixing and/or production method may be used.

The composition as described herein may be prepared in a suitable concentration for use, e.g. in brush or rolling application. Alternatively, the composition may be a concentrate. In this case, further solvent, typically water or organic solvent, is added to the composition described herein to form the final coating composition. After mixing, and optionally after addition of solvent, e.g. water, the coating composition is preferably filled into a container. Suitable containers include cans, drums and tanks.

The coating composition is preferably supplied as a one-pack. Thus the composition is preferably supplied in one-component form, i.e. as a ready-mixed or ready to use form. Optionally the one-pack product may be tinted with pigments prior to application. Optionally water and/or solvent can be added prior to application.

Coatings and Substrates

The present invention also relates to a method of coating a surface, wherein said method comprises:

(i) applying a composition as hereinbefore described to said surface; and

(ii) drying and/or curing said composition to form a coating on the surface.

Application of the coating composition may be accomplished by any convenient means, e.g. via painting with a brush or roller, onto the surface or article. An advantage of the compositions of the present invention is that they are self-drying, i.e. they dry and/or cure at ambient conditions, as hereinbefore defined.

The coating composition, once dried, forms a coating or film. The coating of the present invention therefore comprises the composition as hereinbefore described but with little, or no, water content or organic solvent. Alternatively defined, the coating or film of the present invention is derived from or obtainable from (e.g. obtained from) the composition as hereinbefore defined by drying and/or curing. The coating or film formed, especially when the film is on wood, preferably has a dry film thickness per coat of 25-200 $\mu$m, more preferably 30-100 $\mu$m and still more preferably 45-70 $\mu$m.

Suitable substrates that may be coated with the coating composition herein described include wood, wooden based materials (e.g. MDF, chipboard) metal, stone, plastic, natural and synthetic fibres, glass, ceramics, plaster, concrete, leather, paper, foam or masonry. Preferably the substrate is wood or wooden based material.

The coating composition of the present invention may be applied to furniture, doors and flooring. However, the coating composition of the present invention is particularly suited for application to flooring, in particularly interior flooring. The term flooring, as used herein, includes stair cases. It encompasses any surface that is generally walked on. Preferably, therefore the coating composition of the invention is a floor coating. Representative examples of surfaces or articles that may be coated with the coating composition described herein include wooden floors, parquet floors, laminate floors, tiles, indoor concrete, vinyl and linoleum.

The coating composition of the present invention may be applied directly to a surface of a substrate. The coating composition may be applied directly to a surface of a substrate as a single coat or a plurality of coats, e.g. two, three or four coats and preferably as two coats. Alternatively the coating composition of the present invention may be applied in a coating system. In this case, a primer is preferably applied on the substrate. The primer may be a primer that insulates against water soluble species (e.g. knot bleeding) in the substrate to migrate through the coating film. The primer is preferably applied in one, two or three coats, preferably two coats. The coating composition according to the invention is preferably applied on top of the primer as one, two or three coats, preferably two coats.

The wet film thickness (WFT) of a coating of the present invention is preferably 50-400 $\mu$m, more preferably 100-200 $\mu$m and still more preferably 125-175 $\mu$m per coat. The dry film thickness (DFT) of a coating of the present invention is preferably 25-200 $\mu$m, more preferably 30-100 $\mu$m and still more preferably 45-70 $\mu$m per coat.

When present, the wet film thickness (WFT) of the primer is preferably 40-200 $\mu$m, more preferably 100-125 $\mu$m per coat and/or the dry film thickness (DFT) of the primer is preferably 15-75 $\mu$m, more preferably 35-50 $\mu$m per coat.

The invention will now be described by the following non-limiting examples.

EXAMPLES

**Materials**

The polymers and compounds used in the examples were all commercially available.

The polymer dispersions, waxes, and matting agents employed are described in Tables 1-4 below respectively.

The driers employed in the compositions were Drier 1 (65 wt% solids content) and Drier 2 (1 wt% solids content). Drier 1 is a combination drier in which cobalt compound (Co) is the primary drier, Zirconium compound (Zr) is the secondary drier (through drier) and Lithium compound (Li) is the auxiliary drier. Metal content: approx. 5.00 % Cobalt, approx. 0.22 % Lithium, approx. 7.50 % Zirconium. Drier 2 is an iron complex-based primary drier. Metal content: 800 - 1000 ppm Fe.

The cross-linking agent employed was a polycarbodiimide: VOC-free polycarbodiimide-based dispersion (42.7 % solids). Carbodiimide equivalent = 223-243. pH: 11.

Table 1. Description of polymers used; N/A = not available

| Ingredient | Description | Particle size, Z-average (nm) | Acid number (mgKOH/g) | Solid content (wt% in water) |
|---|---|---|---|---|
| Polymer dispersion 1 | Aliphatic polycarbonate, polyurethane and polyacrylate copolymer | 91 | N/A | 35 $\pm$1 |
| Polymer dispersion 2 | Short oil alkyd emulsion | 247 | 7 | 50 $\pm$1 |

Table 2. Description of waxes used

| Ingredient | Type | Particle size | Melting point (°C) | Solids content (wt%) |
|---|---|---|---|---|
| Composite wax 1 | Polyethylene aluminium oxide composite wax | $D_{50}$ 11.0 $\mu$m $D_{98}$ 31.0 $\mu$m | 110-113 | 100 |
| Composite wax 2 | Polypropylene with inorganic pigment composite wax | $D_{50}$ 6.3 $\mu$m $D_{98}$ 22.0 $\mu$m | 150-156 | 100 |

Table 3. Description of matting agent used

| Ingredient | Particle size, $D_{50}$ | Particle size, $D_{98}$ | Solids content (wt%) |
|---|---|---|---|
| Matting agent 1 | 9.4 $\mu$m | 16.6 $\mu$m | 100 |

Table 4. Description of other ingredients used

| Ingredient | Description | Solid content (wt%) |
|---|---|---|
| Wetting and Dispersing agents | Wetting and Dispersing agents | 52,7 |
| Rheology modifiers | Mix of high and mid shear rheology modifiers | 18,8 |
| Foam control agents | Polysiloxane additives | 90,9 |
| Biocides | In-can preservatives | 17,5 |

**General procedure for the preparation of coating compositions**

The components of the coating compositions were mixed in the proportions set out in the Tables below, wherein amounts are given in wt% (unless otherwise specified). A number of comparative examples were also prepared.

The coating compositions were prepared using a dissolver in 1 L containers. Titanium dioxide and inorganic filler were dispersed in a mill base by adding wetting and dispersing agents. Foam control agents and rheology modifiers were incorporated for optimal dispersion conditions. The coating compositions were dispersed to a fineness of grind of maximum 20 $\mu$m. Matting agent and composite waxes were added towards the end of the mill base using low speed stirring. The remaining ingredients, including polymer dispersion, polycarbodiimide and driers, were mixed in a let-down. The mill base was mixed into the let-down using low speed stirring. Water was incorporated in the mill base and the let-down.

**Test Methods**

• Determination of Acid number

[0248] Solid material of polymer dispersions was obtained by application of respective materials on a glass panel or a PVC panel dependent on their substrate adherence using an applicator with a 400 $\mu$m gap size. Panels were dried for 3 days at 23 °C/50 % RH. The solid materials were released from beneath substrates prior to determination of their respective acid number. Acid number was determined in accordance with NS-EN-ISO 2114:2000, Method A, and reported as the amount, in milligrams, of potassium hydroxide used to neutralize 1 g of resin/polymer.

• Calculation of Volatile Organic Compounds (VOC)

The Volatile Organic Compounds, VOC (g/L), of the coating compositions was calculated as follows:

$$\text{VOC [g/L]} = \frac{\text{total weight VOC [g]}}{(weight\ paint\ /\ density\ paint)\ \text{[L]}}$$

• Calculation of solid content of the coating compositions

The solids content of the compositions were calculated in accordance with ASTM D5201-05a (2020).

• Calculation of Pigment Volume Concentration (PVC)

According to ISO 4681/1 the PVC refers to the ratio of the volume of pigment and other solids particles (e.g. inorganic filler, matting agent, composite wax) in a product to the total volume of the non-volatile matter.

In order to be able to calculate the Pigment Volume Concentration (PVC) of a coating from a composition expressed in proportions by weight, the non-volatile content and density of every component of the coating material is required. From these parameters the approximate volume of the individual components in the coating film can be calculated.

The following equation was used for the calculation of PVC (European Coatings Handbook, Ulrich Zorll, Vincent Verlag 2000):

$$\text{PVC [\%]} = \frac{\sum V\text{pigments} + \sum V\text{fillers}}{\sum V\text{pigments} + \sum V\text{fillers} + \sum V\text{binders}} * 100$$

$$= \frac{\sum V\text{pigments} + \sum V\text{fillers}}{\sum V\text{total}} * 100$$

In the calculation, volume fillers include matting agent, inorganic filler and composite wax as described herein.

• pH

The pH was determined according to NS-ISO 976:2013 using an InoLab pH 7110 pH-meter, with a SenTix 81 combined glass and silver reference electrode. Both units from WTW. The pH-meter was calibrated before use with commercial buffer solutions from Hamilton of pH 7.00 and 10.01 at a temperature $23 \pm 3 \,°C$. Composition samples were tempered to $23 \pm 3 \,°C$ and mixed to ensure that they were homogeneous before measurement. Prior to the measurement, the electrode cap to the filling hole was removed. The electrode was immersed into the sample and the pH reading was allowed to stabilise before recording the pH.

• Gloss

The gloss was determined according to NS-EN ISO 2813:2014. A BYK-micro-tri-gloss instrument was used. The compositions were applied on black glass panels, using a 100 $\mu$m frame applicator and allowed to dry at 23 °C and 50% RH for 24 hours. Values for gloss at 85° geometry are reported as an average of three measurements.

• Determination of particle size of polymers

Particle size analyses were performed according to ISO 22412:2017 by using a Malvern Zetasizer Nano S utilizing Dynamic Light Scattering (DLS). Optical arrangement for DLS was homodyne detection (backscattering detection). Computational unit evaluation was done via autocorrelation function. Evaluation of results was done via correlation analysis using cumulant method. Temperature = 25 °C. The measured particle size is reported as the Z-average diameter.

• Determination of particle size of matting agents and composite wax ($D_{98}$ and $D_{50}$)

$D_{98}$ and $D_{50}$ particle size were determined according to ISO 13320:2009. Samples were collected from thoroughly mixed containers using a spoon. Particle size measurements were obtained on a Mastersizer 3000 instrument using a Hydro G dispersion unit with water (23 °C) as dispersing agent. Samples were manually predispersed in a small beaker by using a pipette before being added to the dispersing unit. Materials were added to the Hydro G until 5-15% obscuration was reached. During measurement 20% ultrasound was applied continuously and the stirrer/pump speed was set to 2400 rpm. The samples were analyzed in manual mode and measurement duration set to 10 seconds. Consecutive measurements were made until stable results were achieved. Analysis model 'General Purpose (Emulated MS2000/MS2000E)' were used to calculate the results.

The Mastersizer 3000 instrument was annually calibrated with latex beads by a Malvern representative. A reference material was regularly measured to ensure that the calibration is still valid.

• Abrasion resistance

Abrasion resistance was evaluated using a Taber Abraser instrument from Taber Industries and a test method based on ISO 7784-2:2016 («Determination of resistance to abrasion. Part 2: Method with abrasive rubber wheels and rotation test specimen») with some modifications. The coating composition was applied in two layers on steel plates (10 cm x 10 cm with a hole in the middle) using a 200 $\mu$m roller applicator. Each layer was applied on subsequent days to allow sufficient drying between coats. The sample was cured for 28 days at climatic conditions (23°C/50% RH) before evaluation. Four parallel samples were prepared for each coating composition.

After curing, the sample was mounted on a turntable platform that rotates on a vertical axis at a fixed speed. When the turntable rotates, contact occurs between the sample and two abrading wheels that slide/rotate across the sample surface. A vacuum system removes debris that detaches from the film due to the abrasion. The resulting abrasion marks form a pattern of crossed arcs in a circular band that cover an area of approximately 30 cm$^2$. The weight of the coated specimen was measured before and after the test and the weight loss of the film was calculated. Abrasion resistance is expressed as the average weight loss of the film (milligrams ; n=4) after 2x500 rotations under the abrading wheels and correlates to the coatings ability to withstand abrasion or wear damage.

After every 500 cycles (i.e., between each sample specimen and once in the middle of testing each sample specimen), dust and debris was removed from the abrading wheels by 50 rotations on S-11 Refacing discs (abrasive paper of grind size P150).

The Taber Abraser set-up was:

Abrading wheels: CS-17 Calibrase - A resilient wheel composed of resilient binder and aluminum oxide or silicon carbide abrasive particles
No. of rotations (cycles): 2x500
Speed of turntable and wheels: 60 rpm/min
Wheel loading: 1000 g on each wheel
Vacuum nozzle height: 5,4 mm

• Scratch resistance

Scratch resistance was determined by using a SH705 Mechanised Scratch Tester from TQC Sheen (Industrial Physics) and a method based on ISO 1518-1:2019 («Determination of scratch resistance. Part 1: Constant-loading method») with some modifications.

One layer of the coating composition was applied on chromate pre-treated alumina panels (Q-Panel ALQ 36; 7.5 x 15 cm) using a 100 $\mu$m frame applicator and the coating was cured for 28 days at climatic conditions (23°C/50% RH) before measurement. Three parallel drawdowns were prepared for each sample.

The film thickness was measured before the test by using an Elcometer 456 Coating Thickness Gauge. The average film thickness was calculated based on 12 measurements and used in the subsequent calculation of scratch resistance.

The test was carried out by mounting the sample specimen underneath a hemispherical needle on the Scratch Tester device. The needle travels across the film with increasing weight load (100 g intervals) until the needle penetrates through the film and comes into contact with the metal substrate. A voltmeter mounted on the front panel indicates contact between the needle tip and the metallic substrate. The needle weight needed to achieve a voltmeter reading of minimum 2.0 volts was noted for each sample and divided by the film thickness to calculate the scratch resistance (g/$\mu$m). An average scratch resistance value (n=3) was calculated for each coating composition.

The Scratch Tester set-up was:

Travel speed: 30mm/s to 40mm/s
Travel distance: 75mm
Scratching tool: 1mm tungsten carbide hemispherical tip

• Water resistance/wet adhesion

Two layers of the coating composition were applied on prefabricated oak parquet with industrial UV varnish (Tarkett Oak Vario 13 mm) using a Jordan roller. The samples were dried for 6 hours at 23 °C and 50 % RH before applying the second layer. Each layer was applied in the range of 125-175 $\mu$m wet film thickness (WFT) (45-70 $\mu$m dry film thickness (DFT)). The samples were cured for 4 weeks at 23 °C and 50 % RH before evaluation of water resistance/wet adhesion.

After the curing process was completed, 1.5 mL tap water was distributed onto the film surface and left under a watch glass (i.e., a circular concave piece of glass) to prevent evaporation. After exposure to water for 1 hour, 3 hours, 6 hours, and 24 hours, the watch glass and the water was removed, and wet adhesion failure was evaluated by using a spatula to scratch the surface. The performance (i.e., how easily the water exposed film can be removed from the substrate) was rated from 0 to 10 according to the Table 5. A result equal to or above 8 was considered acceptable.

A low score was thus given to coatings that easily detach from the substrate upon prolonged exposure to water. A high score was appointed to coatings that displayed very little loss of wet adhesion (i.e., the film remains intact despite high mechanical stress shortly after removal of water spills).

Table 5. Rating scale

| Score | Description |
|---|---|
| 0 | Total destruction of the film |
| 2 | Very bad |
| 4 | Bad |
| 6 | Moderate |
| 8 | Good |
| 10 | Very good |

• Adhesion

Adhesion to the substrate was measured according to NS-EN-ISO 4624:2016 Method B by using DeFelsko PosiTest ATA20 Automatic Adhesion Tester and aluminium dollies with a diameter of 20 mm.

Two layers of the coating composition were applied on prefabricated oak parquet with industrial UV varnish (Tarkett Oak Vario 13 mm) with a Jordan roller. The samples were dried for 6 hours at 23 °C and 50 % RH before applying the second layer. Each layer was applied in the range of 125-175 $\mu$m wet film thickness (WFT) (45-70 $\mu$m dry film thickness (DFT)). The samples were cured for 4 weeks at 23 °C and 50 % RH before evaluation of adhesion. Epoxy Extra Strong, 2-pack epoxy adhesive from Bostik, was used as glue between the dollies and the coating surface. The adhesive was cured for approx. 48 hours before testing. A cutting device was used to cut around the circumference of the dolly and through to the substrate. The breaking strength, given as tensile stress (MPa), required to detach the coating film underneath the dolly from the substrate (oak parquet with industrial UV varnish), was recorded. The reported values for adhesion in terms of breaking strength are the averages of 5 parallel measurements on each coating composition.

• Drying time

A Beck Koller drying time recorder was used to estimate the drying times and drying stages (T1, T2, T3, T4; see Table 6) of the coating compositions. Each coating composition was applied with a 120 $\mu$m steel frame applicator onto a 30 cm x 2 cm glass rod at 23 °C and 50 % RH and placed directly underneath a metal needle mounted on the Beck Koller apparatus. The pin of the metal needle then moves along the film on the glass rod at a speed of 30 cm in 2 hours to record the state of the film at all times. The estimation of each drying stage (T1, T2, T3, T4) are based on triplicate runs of each coating composition. Drying times in the Tables are given in hours (h).

Table 6: Definitions of Drying stages

|  | Drying stage |
|---|---|
|  | Drying stage |
| T1 | End of flow back (set-to-touch-time). The film no longer merges behind the needle. |
| T2 | Surface dry (tack-free time). The needle no longer makes a continuous mark on the substrate. |
| T3 | Surface hardening commenced (hard dry time). The needle no longer makes holes in the film but rather a slight mark on top of the film. |
| T4 | Surface hard (through-dry time). The needle is no longer making a mark on top of the film. |

**Results**

Table 7 below sets out the constituents of a number of coating compositions tested. Comparative example CE1 lacks driers 1 and 2 and CE2 lacks a polycarbodiimide.

| Ingredients (wt%) | Ex 1 | CE1 | CE2 |
|---|---|---|---|
| Polymer dispersion 1 | 22.8 | 22.8 | 27.0 |
| Polymer dispersion 2 | 15.8 | 15.8 | 19.0 |
| Polycarbodiimide dispersion | 8.0 | 8.0 | |
| Matting agent 1 | 2.4 | 2.4 | 2.4 |
| Composite wax 1 | 1.2 | 1.2 | 1.2 |
| Composite wax 2 | 1.2 | 1.2 | 1.2 |
| Drier 1 (Co, Li, Zr) | 0.19 | | 0.19 |
| Drier 2 (Fe) | 0.03 | | 0.03 |
| Water | 11.9 | 12.1 | 12.4 |
| Rheology modifiers | 2.3 | 2.3 | 2.3 |
| Foam control agents | 0.44 | 0.44 | 0.44 |
| Wetting and dispersing agents | 1.55 | 1.55 | 1.55 |
| DPM Glycol ether | 3.3 | 3.3 | 3.3 |
| Mono propylene glycol | 3.3 | 3.3 | 3.3 |
| Biocides | 0.5 | 0.5 | 0.5 |
| Amino-2-methyl-1-propanol (pH-modifier) | 0.1 | 0.1 | 0.1 |
| Titanium dioxide | 19.0 | 19.0 | 19.0 |
| Inorganic filler | 6.0 | 6.0 | 6.0 |
| **Total** | **100** | **100** | **100** |
| Wt% polyurethane (solids) | 7.9 | 7.9 | 9.5 |
| Wt% alkyd (solids) | 7.9 | 7.9 | 9.5 |
| Weight ratio polyurethane:alkyd | 50:50 | 50:50 | 50:50 |
| **Properties and Results** | | | |
| Calculated wt% solids | 50.5 | 50.3 | 50.5 |
| Calculated VOC (g/L) | 94 | 93 | 87 |
| PVC | 38 | 38 | 34 |
| pH | 9.6 | 9.4 | 8.6 |
| Gloss 85° (GU) | 14 | 14 | 14 |
| Drying (T4) (h) | 1.2 | >6 | 0.5 |
| Scratch resistance (g/$\mu$m) | 145 | 58 | 71 |
| Abrasion resistance (mg) | 96 | 96 | 100 |
| Water resistance | 9 | 6 | 6 |
| Adhesion (MPa) | 2.0 | 2.2 | 1.9 |
| **PASS/ FAIL** | **PASS** | **FAIL** | **FAIL** |

These results show that coating compositions of the invention comprising a polyurethane and an alkyd in combination with a polycarbodiimide, composite wax and drier produce coatings with scratch resistance, abrasion resistance, and water resistance as well as strong adhesion. Moreover, the compositions have a relatively short drying time (< 2 hrs) and suitable viscosity for straightforward application. This combination of properties makes the compositions ideal for use as floor coatings.

In contrast, the comparative example CE1, which lacks drier, does not produce a coating with high scratch resistance, reasonable drying time or sufficient water resistance. It has a scratch resistance of 58 g/$\mu$m, which is significantly lower than the resistance of the coating of the invention (145 g/$\mu$m), and a water resistance of 6.

The comparative example CE2, which lacks a polycarbodiimide, does not produce a coating with high scratch resistance or high water resistance. It has a scratch resistance of 71 g/$\mu$m and a water resistance of 6, both of which are lower than the scratch and water resistance of the coating of the invention (145 g/$\mu$m and 9 respectively).

Table 8 below sets out the constituents of another coating composition of the invention, as well as a number of comparative coating compositions. CE3 does not contain any alkyd, CE4 does not contain any polyurethane, and each of CE5-CE7 contain polyurethane and alkyd in a weight ratio outside of the range 85:15 to 30:70.

| Ingredients (wt%) | EX2 | CE3 | CE4 | CE5 | CE6 | CE7 |
|---|---|---|---|---|---|---|
| Polymer dispersion 1 | 33.4 | 43.1 | | 39.6 | 11.2 | 4.50 |
| Polymer dispersion 2 | 7.80 | | 30.4 | 3.2 | 23.5 | 28.0 |
| Polycarbodiimide dispersion | 8.0 | 7.6 | 7.7 | 8.0 | 8.0 | 8.0 |
| Matting agent 1 | 2.4 | 2.4 | 2.4 | 2.4 | 2.4 | 2.4 |
| Composite wax 1 | 1.2 | 1.0 | 1.2 | 1.2 | 1.2 | 1.2 |
| Composite wax 2 | 1.2 | 1.2 | 1.2 | 1.2 | 1.2 | 1.2 |
| Drier 1 (Co, Li, Zr) | 0.19 | 0.19 | 0.19 | 0.19 | 0.19 | 0.19 |
| Drier 2 (Fe) | 0.03 | 0.03 | 0.03 | 0.03 | 0.03 | 0.03 |
| Water | 11.9 | 8.3 | 18.7 | 9.3 | 13.6 | 15.4 |
| Rheology modifiers | 2.3 | 2.5 | 4.0 | 2.3 | 4.5 | 4.8 |
| Foam control agents | 0.44 | 0.44 | 0.44 | 0.44 | 0.44 | 0.44 |
| Wetting and dispersing agents | 1.55 | 1.55 | 1.55 | 1.55 | 1.55 | 1.55 |
| DPM Glycol ether | | | 3.3 | | 3.3 | 3.3 |
| Mono propylene glycol | | | 3.3 | | 3.3 | 3.3 |
| DPnB glycol ether | 4.0 | 6.0 | | 5.0 | | |
| Biocides | 0.5 | 0.5 | 0.5 | 0.5 | 0.5 | 0.5 |
| Amino-2-methyl-1-propanol (pH-modifier) | 0.1 | 0.1 | 0.1 | 0.1 | 0.1 | 0.1 |
| Titanium dioxide | 19.0 | 19.0 | 19.0 | 19.0 | 19.0 | 19.0 |
| Inorganic filler | 6.0 | 6.0 | 6.0 | 6.0 | 6.0 | 6.0 |
| **Total** | **100** | **100** | **100** | **100** | **100** | **100** |
| Wt% polyurethane (solids) | 11.7 | 15.1 | - | 13.9 | 3.9 | 1.6 |
| Wt% alkyd (solids) | 3.9 | - | 15.2 | 1.6 | 11.7 | 14.0 |
| Weight ratio polyurethane:alkyd | 75:25 | 100:0 | 0:100 | 90:10 | 25:75 | 10:90 |
| **Properties and Results** | | | | | | |
| Calculated wt% solids | 50.5 | 49.7 | 50.4 | 50.4 | 49.9 | 49.6 |
| Calculated VOC (g/L) | 65 | 87 | 90 | 78 | 76 | 78 |
| PVC | 39 | 39 | 38 | 39 | 38 | 38 |
| pH | 9.5 | 9.6 | 9.1 | 9.7 | 9.3 | 9.3 |

(continued)

| Properties and Results | | | | | | |
|---|---|---|---|---|---|---|
| Gloss 85° (GU) | 11 | 8 | 40 | 10 | 16 | 21 |
| Drying (T4) (h) | 0.4 | 0.2 | > 6 | 0.2 | 2.6 | >6 |
| Scratch resistance (g/$\mu$m) | 98 | 89 | 73 | 74 | 115 | 111 |
| Abrasion resistance (mg) | 94 | 83 | 110 | 91 | 103 | 106 |
| Water resistance | 10 | 10 | 8 | 10 | 5 | 4.5 |
| Adhesion (MPa) | 2.7 | 3.8 | 2.7 | 3.5 | 1.7 | 2.3 |
| PASS/ FAIL | PASS | FAIL | FAIL | FAIL | FAIL | FAIL |

The results show that the presence of each of polyurethane and an alkyd is critical in the compositions of the invention to achieving the necessary balance of properties for a floor coating. With reference to example 2, comparative example CE3 shows the absence of an alkyd leads to a coating which dries too quickly and has lower scratch resistance (89 g/$\mu$m *cf*. 98 g/$\mu$m) and comparative example CE4 shows the absence of a polyurethane leads to a coating with lower scratch resistance (73 g/$\mu$m *c.f.* 98 g/$\mu$m) as well as an unacceptably long drying time.

Comparative examples CE5-CE7 show that the weight ratio of polyurethane to alkyd is critical to achieving coatings with a desirable combination of properties for use as a floor coating, i.e. scratch resistance, abrasion resistance, water resistance, adhesion and short drying time. Comparative example CE5 shows that when the amount of alkyd present is too low relative to the amount of polyurethane, the resulting coating has too low scratch resistance (74 g/$\mu$m). Comparative examples CE6 and CE7 show that when the amount of polyurethane present is too low relative to the amount of alkyd, the resulting coating has too low water resistance (4.5-5). Additionally, the drying time of the coating may be unacceptable.

## Claims

1. A coating composition, preferably a one-component coating composition, comprising:

    (i) a polyurethane;
    (ii) an alkyd;
    (iii) at least 0.2 wt% composite wax, based on the total weight of the composition;
    (iv) a polycarbodiimide;
    (v) a drier; and
    (vi) water;

    wherein the weight ratio of said polyurethane to said alkyd is 85:15 to 30:70, and said composition has a pH of $\geq$ 8.0, preferably 8.0-12.0, more preferably 8.0-11.0, and still more preferably 8.5-10.0.

2. A composition as claimed in claim 1, wherein the weight ratio of said polyurethane to said alkyd is 80:20 to 40:60.

3. A composition as claimed in claim 1 or 2, wherein the total amount (solids) of said polyurethane and said alkyd present in said composition is 5-45 wt%, more preferably 5-30 wt%, and still more preferably 8-25 wt% based on the total weight of the composition

4. A composition as claimed in any preceding claim, wherein said composite wax comprises at least two, preferably two, immiscible components.

5. A composition as claimed in any preceding claim, wherein said composite wax comprises at least two organic components or at least one organic component and at least one inorganic component, and preferably at least one organic component and at least one inorganic component.

6. A composition as claimed in claim 5, wherein the organic component is selected from polyethylene (e.g. low density polyethylene (LDPE), high density polyethylene (HDPE)), oxidized polyethylene, polypropylene, oxidized polypropylene, polyamide (e.g. Polyamide 6 (Nylon 6), Polyamide 11 (Nylon 11), Polyamide 12 (Nylon 12), Polyamide 46 (Nylon 46), Polyamide 66 (Nylon 66)), carnuba, ethylene-bis-stearamide (EBS), polytetrafluorethylene (PTFE) and/or mixtures thereof, and/or said inorganic component is selected from silica, aluminium oxide, zirconium oxide, carbide, inorganic pigment, graphene, ceramic and/or mixtures thereof.

7. A composition as claimed in any preceding claim, wherein said composite wax has an average particle size (D50) of 1.0-20 $\mu$m, preferably 2.0-15 $\mu$m and more preferably 4.0-12 $\mu$m.

8. A composition as claimed in any preceding claim, wherein said composition comprises two or more, preferably two, composite waxes.

9. A composition as claimed in any preceding claim, wherein the polycarbodiimide has a carbodiimide equivalent weight of 100-700 g/equivalent, preferably 150-400 g/equivalent and more preferably 200-300 g/equivalent.

10. A composition as claimed in any preceding claim, which is curable at ambient temperature, and preferably is curable in the temperature range 5-50 °C.

11. A method for preparing a composition as claimed in any one of claims 1 to 10, comprising mixing:

      (i) a polyurethane;
      (ii) an alkyd;
      (iii) at least 0.2 wt% composite wax, based on the total weight of the composition;
      (iv) a polycarbodiimide;
      (v) a drier; and
      (vi) water.

12. A container containing a composition as claimed in any one of claims 1 to 10.

13. A method of coating a surface, wherein said method comprises:

      (i) applying a composition as claimed in any one of claims 1 to 10 to said surface; and
      (ii) drying and/or curing said composition to form a coating on the surface.

14. A coating on a surface, wherein said coating is formed from a composition as claimed in any one of claims 1 to 10.

15. Use of a composition as claimed in any one of claims 1 to 10 to form a coating on at least one surface of an article.

Europäisches
Patentamt

European
Patent Office

Office européen
des brevets

# EUROPEAN SEARCH REPORT

Application Number

EP 23 21 5861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2002 187932 A (DAINICHISEIKA COLOR CHEM; UKIMA CHEM & COLOUR MFG) 5 July 2002 (2002-07-05) * paragraph [0028]; example 10 * | 1-15 | INV. C08G18/36 C09D7/65 C09D175/04 C08G18/02 C09D5/00 |
| X | JP 2016 017116 A (3M INNOVATIVE PROPERTIES CO) 1 February 2016 (2016-02-01) * paragraphs [0012], [0056], [0020]; claim 1; example 3 * | 1-15 | |
| A | WO 2018/150799 A1 (CXS CORP [JP]) 23 August 2018 (2018-08-23) * paragraph [0084] * | 1-15 | |
| A | US 2010/189993 A1 (MORI YUTAKA [JP] ET AL) 29 July 2010 (2010-07-29) * paragraph [0339] * | 1-15 | |

TECHNICAL FIELDS SEARCHED (IPC)

C08G
C09G
C09D

The present search report has been drawn up for all claims

| Place of search | Date of completion of the search | Examiner |
|---|---|---|
| Munich | 29 April 2024 | Buestrich, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 5861

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2024

| Patent document cited in search report | | Publication date | Patent family member(s) | | Publication date |
|---|---|---|---|---|---|
| JP 2002187932 | A | 05-07-2002 | NONE | | |
| JP 2016017116 | A | 01-02-2016 | NONE | | |
| WO 2018150799 | A1 | 23-08-2018 | JP | 6592469 B2 | 16-10-2019 |
| | | | JP | 2018131597 A | 23-08-2018 |
| | | | WO | 2018150799 A1 | 23-08-2018 |
| US 2010189993 | A1 | 29-07-2010 | CN | 101208397 A | 25-06-2008 |
| | | | EP | 1897921 A1 | 12-03-2008 |
| | | | JP | 2012087304 A | 10-05-2012 |
| | | | US | 2010189993 A1 | 29-07-2010 |
| | | | WO | 2006137560 A1 | 28-12-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022045025 A
- WO 2022045024 A
- WO 2021059835 A
- WO 2020179836 A
- WO 2018194102 A

**Non-patent literature cited in the description**

- Polyurethanes. **MEIER ; VESTHUES ; DANIELMEIER ; KRUPPA ; SQUILLER.** Coatings, Adhesives and Sealants. Vincentz Network, 2019
- **ULRICH POTH.** Polyester and Alkyd Resin: Technical Basics and Applications. Vincentz Network, 2020
- **ULRICH ZORLL,.** European Coatings Handbook. Vincent Verlag, 2000